# EUROPEAN PATENT APPLICATION

(11) **EP 3 125 493 A1**
(43) Date of publication of application: **01.02.2017**
(21) Application number: 16180175.8
(22) Date of filing: 19.07.2016
(51) Int. Cl.: H04L 29/06

(54) **TERMINAL, COMMUNICATION METHOD, AND CARRIER MEANS**

(30) Priority: 28.07.2015 JP 2015148807
(71) Applicant: Ricoh Company, Ltd., Tokyo 143-8555 (JP)
(72) Inventor: HOMMA, Takeshi, Tokyo, 143-8555 (JP); HASEGAWA, Takashi, Tokyo, 143-8555 (JP)
(74) Representative: Schwabe - Sandmair - Marx

(57) **Abstract**

A communication terminal (10, 70a, 70d, 90a), a method of communication, and a carrier means carrying computer readable code for controlling a computer to carry out the method. The communication terminal (10, 70a, 70d, 90a) and the method includes outputting (S23, S101, S 147, S222) terminal identification information identifying a communication terminal (10, 70a, 70d, 90a), receiving (S31, S150) external terminal identification information identifying an external communication terminal, the external terminal identification information being sent from the external communication terminal through a communication management system (50) to an destination address of the communication terminal (10, 70a, 70d, 90a) indicated by the provided terminal identification information, and transmitting (S23, S222) login requesting information for requesting login authentication of the external communication terminal to the communication management system (50), the login requesting information including the received external terminal identification information.

## Description

### BACKGROUND

### Technical Field

Embodiments of the present invention relate to a terminal, a communication method, and a recording medium storing a program.

### Background Art

With the increased need for reducing the cost of business trip and the time spent for the business trip, video conference systems for arranging a video conference among a plurality of sites are now widely used. The video conference systems directly transmit or receive image data and audio data among a plurality of communication terminals such as video conference terminals (see JP-2012-178135-A).

However, when a mobile station such as a smartphone receives a request to start intercommunication from a starting terminal that requests communication, the display screen of such a mobile station is small. For this reason, it is not easy to sufficiently communicate with each other through the telecommunication. Accordingly, a user of such a mobile station wishes to switch to a different terminal with a larger display screen. However, there is a problem that such a switching is not easy and not smooth as it is necessary to join the intercommunication from a terminal with a larger display screen and to disconnect the communication through the mobile station.

### SUMMARY

Embodiments of the present invention described herein provide a communication terminal, a method of communication, and a carrier means carrying computer readable code for controlling a computer to carry out the method. The communication terminal and the method includes outputting terminal identification information identifying a communication terminal, receiving external terminal identification information identifying an external communication terminal, the external terminal identification information being sent from the external communication terminal through a communication management system to an destination address of the communication terminal indicated by the provided terminal identification information, and transmitting login requesting information for requesting login authentication of the external communication terminal to the communication management system, the login requesting information including the received external terminal identification information.

According to one aspect of the present invention, switching from one terminal to another terminal can be made easier and more smooth.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a schematic diagram illustrating a part of a communication system relating to video conference communication, according to an embodiment of the present invention.
FIG. 2 is a schematic block diagram illustrating a hardware configuration of a video conference terminal according to an embodiment of the present embodiment.
FIG. 3 is a schematic block diagram illustrating a hardware configuration of a communication management system and the relay device according to an embodiment of the present embodiment.
FIG. 4 is a schematic block diagram illustrating a hardware configuration of an electronic whiteboard according to an embodiment of the present embodiment.
FIG. 5 is a schematic block diagram illustrating a hardware configuration of a smartphone according to the present embodiment.
FIG. 6 is a diagram illustrating a schematic network configuration of the communication system of FIG. 1 according to an embodiment of the present invention.
FIG. 7 is a functional block diagram of the communication system of FIG. 1 according to an embodiment of the present invention.
FIG. 8 is another functional block diagram of the communication system of FIG. 1 according to an embodiment of the present invention.
FIG. 9 is a diagram illustrating an example data structure of an authentication management table, according to an embodiment of the present invention.
FIG. 10 is a diagram illustrating an example data structure of a terminal management table, according to an embodiment of the present invention.
FIG. 11 is a diagram illustrating an example data structure of a contact list management table, according to an embodiment of the present invention.
FIG. 12 is a diagram illustrating a session management table according to an embodiment of the present invention.
FIG. 13 is a diagram illustrating a communication information management table according to an embodiment of the present invention.
FIG. 14A and FIG. 14B are a data sequence diagram illustrating the operation of preparing for communication between the communication terminals of the communication system of FIG. 1, according to an embodiment of the present invention.
FIG. 15A illustrates an example of a login screen of a mobile station according to an embodiment of the present invention.
FIG. 15B illustrates an example of a contact list displayed on a mobile station according to an embodiment of the present invention.
FIG. 15C illustrates an example of a contact list displayed on a communication terminal 10 according to an embodiment of the present invention.
FIG. 16A and FIG. 16B are a sequence diagram illustrating how intercommunication starts among terminals, according to an embodiment of the present invention.
FIG. 17A, FIG. 17B, FIG. 17C, and FIG. 17D are diagrams illustrating examples of the screen of a mobile station when the mobile station communicates with another terminal, according to an embodiment of the present invention.
FIG. 18A is a diagram illustrating an example of the screen on a communication terminal 70d side during intercommunication, according to an embodiment of the present invention.
FIG. 18B is another diagram illustrating an example of the screen on a communication terminal 70a side during intercommunication, according to an embodiment of the present invention.
FIG. 19 is a sequence diagram illustrating the processes of switching intercommunication to a terminal to be switched to, while a switching terminal is communicating with a counterpart terminal, according to an embodiment of the present invention.
FIG. 20A and FIG. 20B are diagrams each illustrating an example of a screen of a terminal to be switched to, which appears when intercommunication is to be switched, according to an embodiment of the present invention.
FIG. 21 is a sequence diagram illustrating the processes in which a terminal to be switched to joins intercommunication, according to an embodiment of the present invention.
FIG. 22 is a sequence diagram illustrating how a terminal to be switched to makes a switching terminal log in and sends a status change notice on behalf of the switching terminal, according to an embodiment of the present invention.
FIG. 23A and FIG. 23B each illustrates an example of a contact list displayed on a communication terminal 10, according an embodiment of the present invention.
FIG. 24 is a sequence diagram illustrating the processes of terminating intercommunication, according to an embodiment of the present invention.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result. In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more central processing units (CPUs), digital signal processors (DSPs), application-specific-integrated-circuits (ASICs), field programmable gate arrays (FPGAs), computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

In the following description, an embodiment of the present invention is described with reference to the drawings.

### «Schematic Configuration of Communication System»

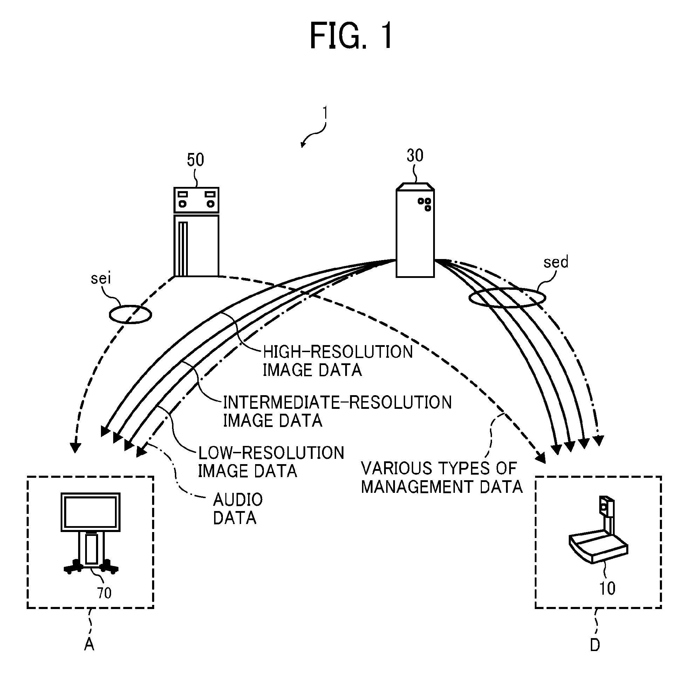

Firstly, a communication system 1 that performs a video conference between a plurality of communication terminals 10 and 70 is described with reference to FIG. 1. FIG. 1 is a schematic diagram illustrating the communication of the video conference performed by the communication system according to an embodiment of the present invention.

Note that the "video conference" may also be referred to as a "television (TV) conference". Here, the video conference is described by way of example, but such a video conference may just be a simple conversation.

The communication system 1 includes the multiple communication terminals 10 and 70, a relay device 30, and a communication management system 50. The communication terminals 10 and 70 transmit and receive image data and audio data that are an example of the contents of data. In FIG. 1, a video conference terminal is depicted as an example of the communication terminal 10, and an electronic whiteboard is depicted as an example of the communication terminal 70. Note that image data may be a video image or a still image or both of the video image and the still image.

The communication terminal that serves as a requesting terminal that requests the start-up of a video conference is referred to as a "starting terminal", and the communication terminal that serves as the destination of the request (relaying destination) is referred to as a "counterpart terminal". In FIG. 1, the communication terminal 70 and the communication terminal 10 are referred to as a starting terminal and a counterpart terminal, respectively. However, when the communication terminal 10 requests to start a video conference with the communication terminal 70, the communication terminal 10 serves as a starting terminal, and the communication terminal 70 serves as a counterpart terminal. Note that the communication terminals 10 and 70 may be used not only for communication among a plurality of offices or for communication among different rooms in the same office, but also for communication within the same room or for outdoor-indoor communication or outdoor-outdoor communication.

The relay device 30 relays contents of data among a plurality of communication terminals 10 and 70. The communication management system 50 collectively manages the login authentication of the communication terminals 10 and 70, the communication status of the communication terminals 10 and 70, a contact list, the communication status of the relay device 30, or the like. The relay devices 30 and the communication management system 50 according to the present embodiment may be configured by a single computer or a plurality of computers to which functions are allocated as desired in a divided manner.

In the communication system 1, a management information session sei for sending and receiving various kinds of management information is established between the starting terminal and the counterpart terminal via the communication management system 50. Moreover, the four sessions of sending and receiving the four kinds of data including high-resolution image data, medium-resolution image data, low-resolution image data, and audio data are established between the starting terminal and the counterpart terminal via the relay device 30. In FIG. 1, these four sessions are collectively referred to as an image and audio data session sed. The image and audio data session "sed" does not necessarily include four sessions, but may include any number of sessions greater than or less than four. Alternatively, a communication session may directly be established between a starting terminal and a counterpart terminal without the relay device 30.

Here, the resolution of image data used in the present embodiment is described. The low-resolution image data serves as a base image, and has, for example, horizontal 160 pixels by vertical 120 pixels. The intermediate-resolution image data has, for example, horizontal 320 pixels by vertical 240 pixels. The high-resolution image data has, for example, horizontal 640 pixels by vertical 480 pixels. In the case of a narrow band path, low-quality image data that only includes low-resolution image data serving as a base image is relayed. In the case of a relatively wide band path, intermediate-quality image data including low-resolution image data serving as a base image and intermediate-resolution image data is relayed. In the case of a very wide band path, high-quality image data including low-resolution image data serving as a base image, intermediate-resolution image data, and high-resolution image data is relayed. As audio data has a relatively small data size compared with image data, such audio data is relayed even in the case of a narrow band path.

### «Hardware Configuration according to Present Embodiment»

### Next, the hardware configuration according to the present embodiment is described. «Hardware Configuration of Video Conference Terminal»

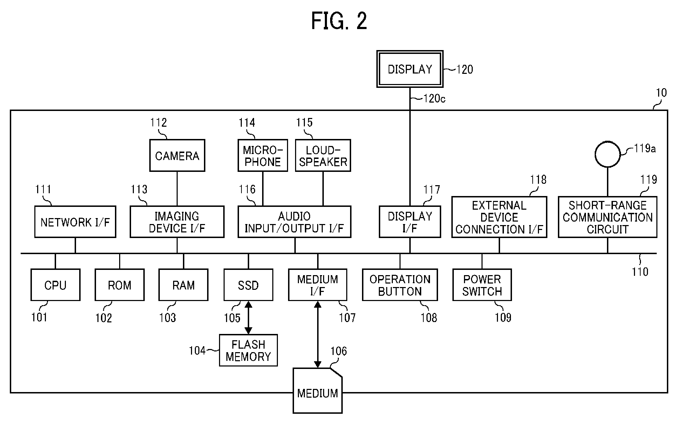

FIG. 2 is a schematic block diagram illustrating the hardware configuration of a video conference terminal according to the present embodiment. As illustrated in FIG. 2, the video conference terminal, which is given as an example of the communication terminal 10 according to the present embodiment, includes a central processing unit (CPU) 101, a read only memory (ROM) 102, a random access memory (RAM) 103, a flash memory 104, a solid state disk (SSD) 105, a media interface (I/F) 107, an operation key (operation keys) 108, a power switch 109, a bus line 110, a network interface (I/F) 111, a camera 112, an imaging device interface (I/F) 113, a microphone 114, a loudspeaker 115, an audio input and output interface (I/F) 116, a display interface (I/F) 117, an external device connection interface (I/F) 118, a short-range communication circuit 119, and an antenna 119a of the short-range communication circuit 119. The CPU 101 controls the overall operation of the communication terminal 10. The ROM 102 stores a control program used for operating the CPU 101 such as an Initial Program Loader (IPL). The RAM 103 is mainly used as a work area in which the CPU 101 executes a program. The flash memory 104 stores various kinds of data such as a communication control program, image data, and audio data. The SSD 105 controls reading or writing of various kinds of data to or from the flash memory 104 under the control of the CPU 101. Note that a hard disk drive (HDD) may be used instead of the SSD. The medium I/F 107 controls reading or writing of data with respect to a recording medium 106 such as a flash memory. The operation key 108 is operated by a user to input a user instruction such as a user selection of a destination of the communication terminal 10. The power switch 109 turns on or off the power of the communication terminal 10.

The network I/F 111 allows communication of data with an external device through a communication network 4 such as the Internet. The camera 112 is an example of imaging device that captures a subject under control of the CPU 101 to obtain the image data of the subject, and may be incorporated in the communication terminal. The imaging device I/F 113 is a circuit that controls the driving of the camera 112. The microphone 114 is an example of a built-in sound collector capable of inputting audio under the control of the CPU 101. The audio input and output (input/output) interface (I/F) 116 is a circuit for inputting or outputting an audio signal between the microphone 114 and the loudspeaker 115 under the control of the CPU 101. The display interface (I/F) 117 is a circuit that sends the image data to an external display 120 according to the control made by the CPU 101. The external device connection I/F 118 is an interface circuit that connects the terminal 10 to various kinds of external devices. The short-range communication circuit 119 is a communication circuit that communicates in compliance with, for example, a near-field communication (NFC; Registered Trademark) or Bluetooth (Registered Trademark).

The bus line 110 is, for example, an address bus or a data bus, which electrically connects various elements such as the CPU 101 illustrated in FIG. 2.

The display 120 may be a liquid crystal or organic electroluminescence (EL) display that displays an image of a subject, an operation icon, or the like. The display 120 is connected to the display interface (I/F) 117 via a cable 120c. The cable 120c may be an analog red green blue (RGB) (video graphic array (VGA)) signal cable, a component video cable, a high-definition multimedia interface (HDMI, registered trademark) signal cable, or a digital video interactive (DVI) signal cable.

The camera 112 includes a lens and a solid-state image sensing device that converts an image (video) of a subject to electronic data by converting light to electric charge. As the solid-state image sensing device, for example, a complementary metal-oxide-semiconductor (CMOS) or a charge-coupled device (CCD) is used. The external device connection I/F 118 is capable of connecting an external device such as an external camera, an external microphone, or an external loudspeaker through a Universal Serial Bus (USB) cable or the like. In the case where an external camera is connected, the external camera is driven in preference to the built-in camera 112 under the control of the CPU 101. Similarly, in the case where an external microphone is connected or an external loudspeaker is connected, the external microphone or the external loudspeaker is driven in preference to the built-in microphone 114 or the built-in loudspeaker 115 under control of the CPU 101.

The recording medium 106 is removable from the communication terminal 10. In addition, a nonvolatile memory that reads or writes data under control of the CPU 101 is not limited to the flash memory 104, and an electrically erasable and programmable read-only memory (EEPROM) may be used instead.

### <Hardware configuration of Communication Management System and Relay Device>

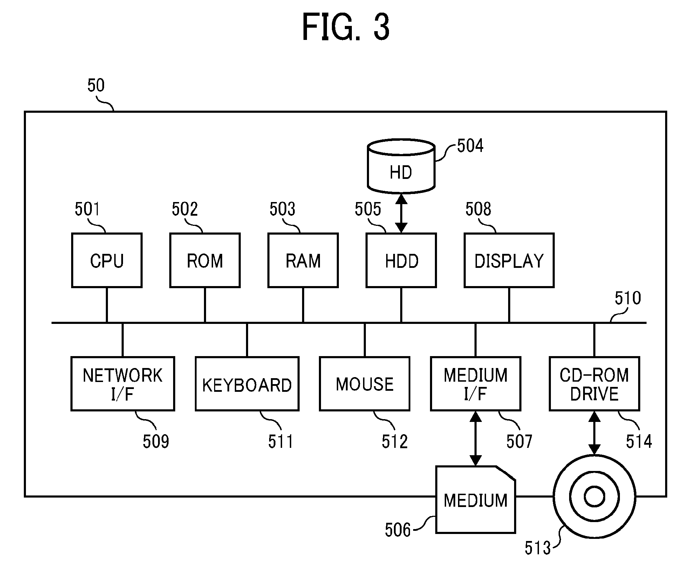

FIG. 3 is a schematic block diagram illustrating the hardware configuration of the communication management system 50 and the relay device 30 according to the present embodiment. A server computer, which is an example of the communication management system 50, includes a CPU 501, a ROM 502, a RAM 503, a hard disk (HD) 504, a hard disk drive (HDD) 505, a recording medium 506, a medium interface (I/F) 507, a display 508, a network interface (I/F) 509, a keyboard 511, a mouse 512, a compact disc read only memory (CD-ROM) drive 514, and a bus line 510.

The CPU 501 controls entire operation of the communication management system 50. The ROM 502 stores a control program for controlling the CPU 501 such as an IPL. The RAM 503 is mainly used as a work area in which the CPU 501 executes a program. The HD 504 stores various data such as the communication management program. The HDD 505 controls reading or writing of various data to or from the HDD 504 under control of the CPU 501. The medium I/F 507 controls reading or writing of data with respect to a recording medium 506 such as a flash memory. The display 508 displays various information such as a cursor, menu, window, characters, or image. The network I/F 509 is an interface for communicating data with an external device through the second communication network 4 such as the Internet. The keyboard 511 is one example of input device provided with a plurality of keys for allowing a user to input characters, numerals, or various instructions. The mouse 512 is one example of input device for allowing the user to select a specific instruction or execution, select a target for processing, or move a cursor being displayed. The CD-ROM drive 514 reads or writes various data with respect to a CD-ROM 513, which is one example of removable recording medium.

The bus line 510 is, for example, an address bus or a data bus, which electrically connects various elements such as the CPU 501 illustrated in FIG. 3.

Note that the hardware configuration of the relay device 30 illustrated in FIG. 1 is similar to that of the communication management system 50, and thus the description of the hardware configuration of the relay device 30 is omitted. However, the relay device 30 stores a relay control program in the HD 504 in alternative to the management program.

### «Hardware Configuration of Electronic Whiteboard»

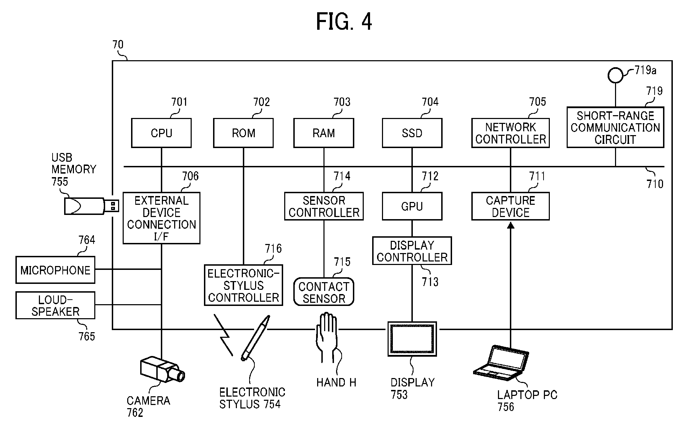

FIG. 4 is a schematic block diagram illustrating the hardware configuration of an electronic whiteboard according to the present embodiment. As illustrated in FIG. 4, an electronic whiteboard, which is given as an example of the communication terminal 70 according to the present embodiment, includes a CPU 701, a ROM 702, a RAM 703, an SSD 704, a network controller 705, and an external device connection interface (I/F) 706.

The CPU 701 controls entire operation of the electronic whiteboard. The ROM 702 stores a control program for controlling the CPU 701 such as an IPL. The RAM 703 is mainly used as a work area in which the CPU 701 executes a program. The SSD 704 stores various kinds of data such as the control program for the electronic whiteboard. The network controller 705 controls communication with an external device through the communication network 4. The external memory controller 706 controls communication with an external device such as a USB memory 755, and external devices such as a camera 762, a loudspeaker 765, a microphone 764, etc.

Moreover, the electronic whiteboard includes a capture device 711, a graphics processing unit (GPU) 712, a display controller 713, a sensor controller 714, a contact sensor 715, an electronic-stylus controller 716, a short-range communication circuit 719, and an antenna 719a of the short-range communication circuit 719.

The capture device 711 displays the video data on the display of a laptop personal computer (PC) 756 as a still image or moving images. The GPU 712 is a semiconductor chip specializing in processing graphics. The display controller 713 controls the visual display to output the image generated by the GPU 712 to the display 753 or the like. The contact sensor 715 detects a touch onto the display 753 with an electronic stylus 754 or a user's hand H. The sensor controller 714 controls the operation of the contact sensor 715. The contact sensor 715 senses a touch input to a specific coordinate using the infrared blocking system. More specifically, the display 753 is provided with two photoreceptors disposed on both upper side ends of the display 753, and a reflector frame. The photoreceptors emit a plurality of infrared rays in parallel to a touch panel of the display 753. The photoreceptors receive lights passing in the direction that is the same as an optical path of the emitted infrared rays, which are reflected by the reflector frame. The contact sensor 715 outputs an identifier (ID) of the infrared ray that is blocked by an object (such as the user's hand) after being emitted from the light receiving elements, to the sensor controller 714. Based on the ID of the infrared ray, the sensor controller 714 detects a specific coordinate that is touched. The electronic stylus controller 716 communicates with the electronic stylus 754 to detect a touch by the tip or bottom of the stylus 754 to the display 753. The short-range communication circuit 719 is a communication circuit that communicates in compliance with the NFC (Registered Trademark), the Bluetooth (Registered Trademark), and the like.

The bus line 710 is, for example, an address bus or a data bus, which electrically connects various elements such as the CPU 711 illustrated in FIG. 3.

In the present embodiment, the contact sensor 715 uses the infrared blocking system. However, no limitation is intended therein. The contact sensor 715 may use various types of detectors such as a capacitive touch panel that detects changes in capacitance to specify a touched position, a resistive touch panel that senses changes in voltage between two facing resistive membranes to specify a touched position, and an electromagnetic induction type touch panel that detects electromagnetic induction caused when an object touches a display unit to specify a touched position. In addition or in alternative to detecting a touch by the tip or bottom of the stylus 754, the electronic stylus controller 716 may also detect a touch by another part of the electronic stylus 754, such as a part held by a hand.

### <Hardware Configuration of Smartphone>

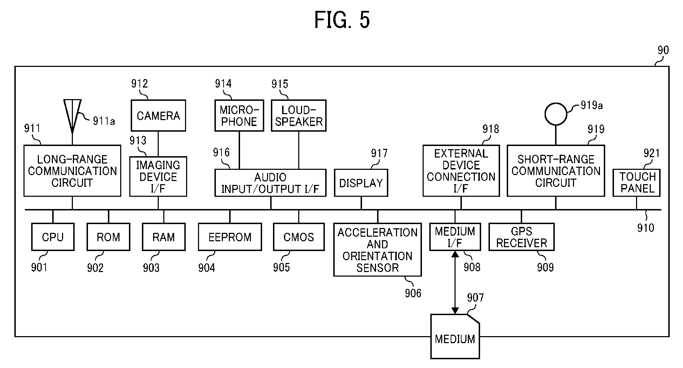

FIG. 5 is a schematic block diagram illustrating the hardware configuration of a smartphone according to the present embodiment. As illustrated in FIG. 5, a smartphone, which is given as an example of a mobile station 90 according to the present embodiment, includes a CPU 901, a ROM 902, a RAM 903, an electrically erasable and programmable read only memory (EEPROM) 904, a complementary metal oxide semiconductor (CMOS) sensor 905, an acceleration and orientation sensor 906, a medium interface (I/F) 908, and a global positioning system (GPS) receiver 909.

The CPU 901 controls the overall operation of the smartphone 90. The ROM 902 stores a program used for driving the CPU 901, the information processing language (IPL), or the like. The RAM 903 is mainly used as a work area in which the CPU 901 executes a program. The EEPROM 904 reads or writes various kinds of data such as a mobile station control program under control of the CPU 901. The CMOS sensor 905 captures an object under the control of the CPU 901 to obtain captured image data. The acceleration and orientation sensor 906 includes various kinds of sensors such as an electromagnetic compass or gyrocompass for detecting geomagnetism and an acceleration sensor. The medium I/F 908 controls reading or writing of data with respect to a recording medium 907 such as a flash memory. The GPS receiver 909 receives a GPS signal from a GPS satellite.

Moreover, the smartphone includes a long-range communication circuit 911, a camera 912, an imaging device interface (I/F) 913, a microphone 914, a loudspeaker 915, an audio input and output interface (I/F) 916, a display 917, an external device connection interface (I/F) 918, a short-range communication circuit 919, an antenna 919a of the short-range communication circuit 919, and a touch panel 921.

The long-range communication circuit 911 is a circuit that communicates with the other device through a communication network 2 such as the mobile communication network. The camera 912 is an example of a built-in imaging device that captures a subject under the control of the CPU 901 to obtain image data. The imaging device I/F 913 is a circuit that controls the driving of the camera 912. The microphone 914 is an example of a built-in sound collector capable of inputting audio under the control of the CPU 901. The audio input and output (input/output) interface (I/F) 916 is a circuit for inputting or outputting an audio signal between the microphone 914 and the loudspeaker 915 under the control of the CPU 901. The display 915 may be a liquid crystal or organic electro luminescence (EL) display that displays an image of a subject, an operation icon, or the like. The external device connection I/F 918 is an interface circuit that connects the mobile station 90 to various kinds of external devices. The short-range communication circuit 919 is a communication circuit that communicates in compliance with the NFC (Registered Trademark), the Bluetooth (Registered Trademark), or the like. The touch panel 921 is an example of an input device to operate a smartphone by touching the screen of the display 917.

The bus line 910 is, for example, an address bus or a data bus, which electrically connects various elements such as the CPU 901 illustrated in FIG. 5.

The mobile station 90 is not limited to a smartphone, but may be implemented, for example, by a tablet, a smart watch, a mobile phone, and a portable game machine.

Further, the control program may be recorded in a file in a format installable or executable on a computer-readable recording medium such as the recording medium 907 for distribution. Examples of the recording medium include, but not limited to, Compact Disc

Recordable (CD-R), Digital Versatile Disc (DVD), Blu-ray disc, and SD card.

### «Schematic Configuration of Communication System»

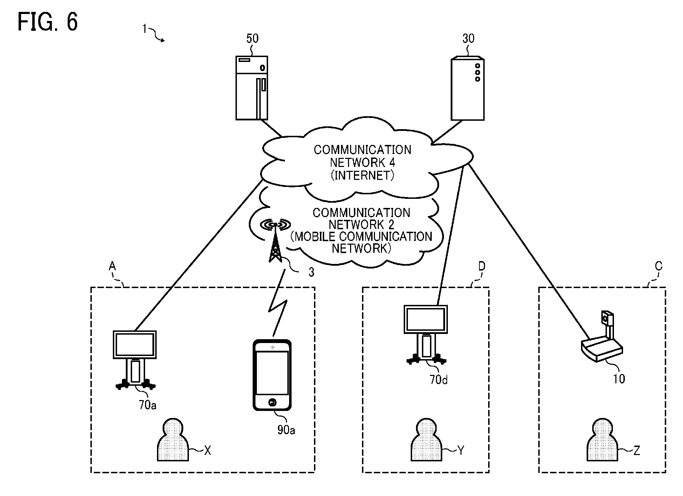

Next, the schematic configuration of a communication system according to the present embodiment is described with reference to FIG. 6. FIG. 6 is a diagram illustrating a schematic configuration of a communication system according to the present embodiment of the present invention.

As illustrated in FIG. 6, the communication terminal 70a and the mobile station 90a are arranged at a base A, and the communication terminal 70d and the communication terminal 10 are arranged at a base D and a base C, respectively. For example, it is assumed that the base A, the base D, and the base C are Japan, the U.K., and the U.S., respectively. At the base A, a user X of the communication terminal 70a uses the mobile station 90a that is a kind of the mobile station 90. At the base D, a user Y of the communication terminal 70d uses the communication terminal 70d that is a kind of the communication terminal 70. Further, at the base C, a user Z of the communication terminal 10 uses the communication terminal 10.

The mobile station 90a can perform the intercommunication of data with the communication terminal 70d or the communication terminal 10 via a base station 3, a communication network 2 such as a mobile communication network, or a communication network 4 including the Internet.

The communication terminal 70a, the relay device 30, the communication management system 50, the communication terminal 70d, and the communication terminal 10 can perform the intercommunication of data with each other via the communication network 4. Note that the communication networks 2 and 4 may include radio communication.

In FIG. 6, the communication terminal 70a indicates the local terminal, and the mobile station 90a indicates an external terminal.

### «Functional Configuration of Embodiment»

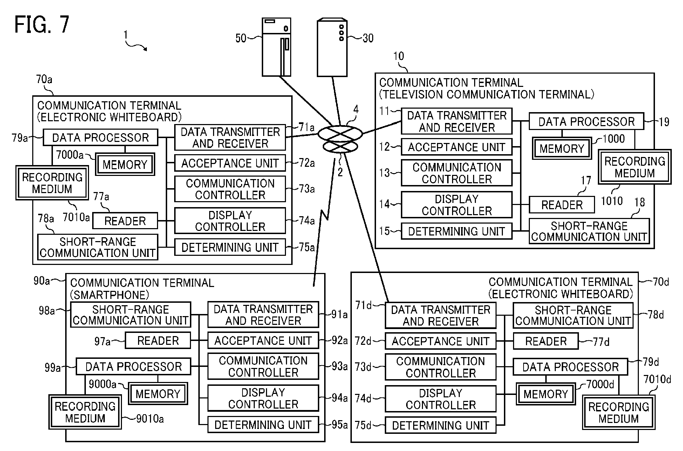

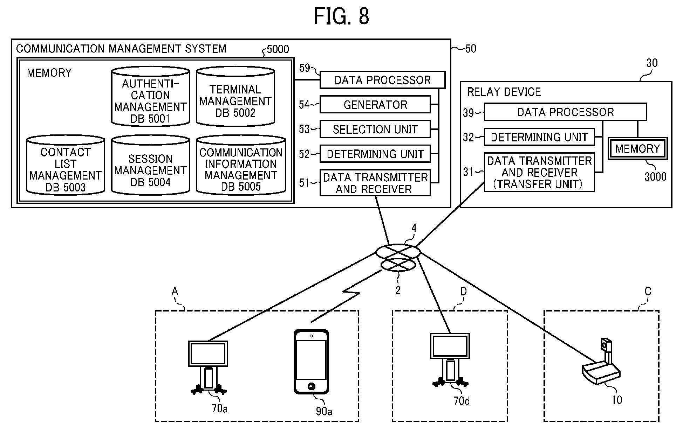

Next, the functional configuration according to the present embodiment is described with reference to FIG. 2 to FIG. 5, FIG. 7, and FIG. 8. FIG. 7 and FIG. 8 are functional block diagrams of the communication system according to the present embodiment.

### <Functional Configuration of Communication Terminal 10>

As illustrated in FIG. 7, the communication terminal 10 includes a data transmitter and receiver 11, an acceptance unit 12, a communication controller 13, a display controller 14, a determining unit 15, a reader 17, a short-range communication unit 18, and a data processor 19. These elements are functions that are implemented by the operation of some of the hardware components illustrated in FIG. 2 executed by the instructions from the CPU 101 in accordance with a communication control program developed from the flash memory 104 onto the RAM 103. The communication terminal 10 further includes a memory 1000 configured by the RAM 103 illustrated in FIG. 2 and the flash memory 104 illustrated in FIG. 2.

### <Detailed Functional Configuration of Communication Terminal 10>

Next, the components of the communication terminal 10 are described. The data transmitter and receiver 11 is implemented by the instructions from the CPU 101, the network I/F 111, and the external device connection I/F 118, each of which is illustrated in FIG. 2, and transmits or receives various data (or information) to or from the other terminal, apparatus, or system through the communication network 4. Before starting communication with a counterpart terminal, the data transmitter and receiver 11 starts receiving terminal status information indicating the operating status of each communication terminal as a candidate counterpart terminal, from the communication management system 50. The status information does not only indicate the operating status of each communication terminal (whether the communication terminal is in an online or offline (disconnected) state), but also indicates a detailed state such as whether an online communication terminal can actually be reached, whether the online communication terminal is currently communicating with another terminal, and whether the user of the online communication terminal is temporarily absent. Hereinafter, the case in which the status information indicates the operating status is described by way of example.

The acceptance unit 12 is substantially implemented by the instructions from the CPU 101, the operation key 108, and the power switch 109, each of which is illustrated in FIG. 2, and receives various kinds of inputs.

The communication controller 13 is implemented by the instructions of the CPU 101, and any desired device relating to input or output of content data. In one example, the communication control 13 is implemented by the instructions of the CPU 101, the camera 112, and the imaging device I/F 113, each of which is illustrated in FIG. 4. The communication control 13 captures an image of a subject and outputs image data obtained by capturing the image. In one example, the communication controller 13 is implemented by the instructions of the CPU 101 illustrated in FIG. 2 and by the audio input and output I/F 116 illustrated in FIG. 2. After the sound of the user is converted to an audio signal by the microphone 114, the communication controller 13 receives audio data according to this audio signal. In another example, the communication controller 13 is implemented by the instructions from the CPU 101 illustrated in FIG. 2 and by the audio input and output I/F 116 illustrated in FIG. 2, and outputs the audio signal according to the audio data to the loudspeaker 115, and the loudspeaker 115 outputs audio.

The display controller 14 is substantially implemented by the instructions from the CPU 101 illustrated in FIG. 2 and the display interface (I/F) 117 illustrated in FIG. 2, and combines received image data of different resolutions to transmit the combined image data to the display 120. The display control 14 also transmits information on a contact list, received from the communication management system 50, to the display 120, and controls display of the contact list on the display 120.

The reader 17 is substantially implemented by the instructions from the CPU 101, and any desired device relating to input or output of content data. In one example, the reader 17 is implemented by the instructions from the CPU 101, the camera 112, and the imaging device I/F 113, each of which is illustrated in FIG. 2. The reader 17 reads a bar code such as a Quick Response (QR) code (registered trademark) to obtain the data indicated by the bar code.

The short-range communication unit 18 is substantially implemented by the instructions from the CPU 101, and the short-range communication circuit 119 with the antenna 119a, each of which is illustrated in FIG. 2, and transmits (provides) data and receives (obtains) data to or from another terminal provided with a short-range communication unit by short-range radio communication.

The data processor 19 is substantially implemented by the instructions from the CPU 101 and the SSD 105 illustrated in FIG. 2, and performs processing to store various types of data in the memory 1000 or the recording medium 1010 or to read various types of data stored in the memory 1000 or the recording medium 1010.

Further, every time image data and audio data are received in performing communication with another counterpart terminal, the received image data and audio data are overwritten and stored in the memory 1000. The display 120 displays an image based on image data before being overwritten, and the loudspeaker 115 outputs audio based on audio data before being overwritten. The recording medium 1010 is implemented by the USB recording medium 106 illustrated in FIG. 2.

Note that a terminal ID in the present embodiment is an example of terminal identification information that is used to uniquely identify the specific communication terminal 10. Such terminal identification information includes a language, a character, a symbol, or various kinds of marks. For example, the terminal ID may be a combination of at least two of the above-mentioned language, character, symbol, and various kinds of marks. Instead of a terminal ID, a user ID for identifying the user at the terminal 10 may be used. In such case, terminal identification information includes not only the terminal ID, but also the user ID.

### <Functional Configuration of Relay Device>

As illustrated in FIG. 8, the relay device 30 includes a data transmitter and receiver 31 that also serves as a transfer unit, a determining unit 32, and a data processor 39. These units are functions that are implemented by or that are caused to function by operating any of the elements illustrated in FIG. 3 in cooperation with the instructions of the CPU 501 according to the relay device control program expanded from the HD 504 to the RAM 503. The relay device 30 also includes a memory 3000 implemented by the RAM 503 illustrated in FIG. 3 and/or the HD 504 illustrated in FIG. 3.

### <Detailed Functional Configuration of Relay Device>

Next, the functional configuration of the relay device 30 is described in detail. In the following description of the functional configuration of the relay device 30, the relation between the hardware elements in FIG. 3 with the elements implementing the functional configuration of the relay device 30 illustrated in FIG. 8 is described.

The data transmitter and receiver 31 of the relay device 30 illustrated in FIG. 8 is implemented by the instructions from the CPU 201 illustrated in FIG. 3 and the network interface (I/F) 509 illustrated in FIG. 3, and transmits or receives various kinds of data (or information) to or from the other terminal, apparatus, or system through the communication network 4. The data transmitter and receiver 31 also serves as a transferor to transfer the image data and audio data transmitted from a prescribed communication terminal (such as the communication terminal 10) to another communication terminal (such as the communication terminal 70).

The determiner 32 is implemented by the instructions from the CPU 201 illustrated in FIG. 3, and determines delay of data transmission or the like.

The data processor 39 is substantially implemented by the instructions from the CPU 501 illustrated in FIG. 3 and the HDD 505 illustrated in FIG. 3, and performs processing to store various types of data in the memory 3000 or read various types of data stored in the memory 3000.

### <Functional Configuration of Communication Management System>

As illustrated in FIG. 8, the communication management system 50 includes a data transmitter and receiver 51, a determining unit 52, a selection unit 53, a generator 54, and a data processor 59. These units are functions that are implemented by or that are caused to function by operating any of the elements illustrated in FIG. 7 in cooperation with the instructions of the CPU 501 according to the communication management program expanded from the HD 504 to the RAM 503. The communication management system 50 also includes a memory 5000 that is configured by the HD 504 illustrated in FIG. 3.

### <Authentication Management Table>

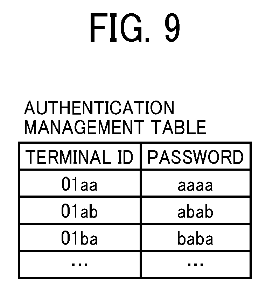

FIG. 9 is a diagram illustrating an authentication management table according to the present embodiment. In the memory 5000, as illustrated in FIG. 9, an authentication management data base (DB) 5001 that is made of an authentication management table is stored. The authentication management table stores, for each one of the terminals 10, 70, and 90 managed by the communication management system 50, the terminal ID and the password in association with each other. For example, the authentication management table illustrated in FIG. 9 indicates that the terminal ID of the terminal 70aa, which is a kind of the communication terminal 70, is "01aa", and the password of the terminal 70aa is "aaaa". Such a password is an example of authentication data, and the authentication data may include an access token.

### <Terminal Management Table>

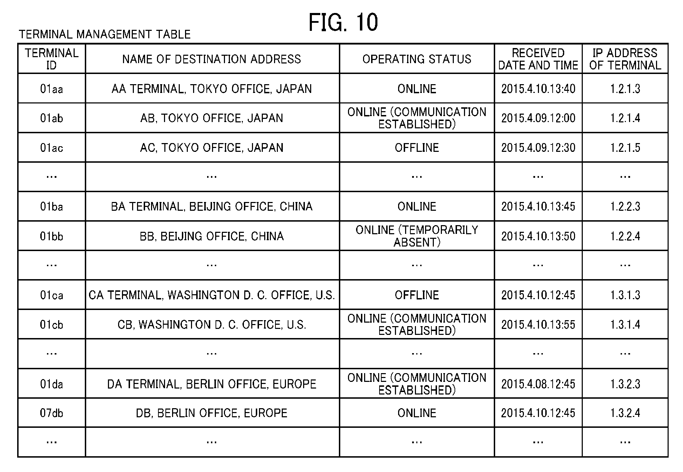

FIG. 10 is a diagram illustrating a terminal management table according to the present embodiment. In the memory 5000, as illustrated in FIG. 10, a terminal management data base (DB) 5002 that is made of a terminal management table is stored. The terminal management table stores, for the terminal ID of each one of the terminals (such as the communication terminals 10, 70, and 90) managed by the communication management system 50, the name of destination address when each of the terminals 10, 70, and 90 serves as a counterpart terminal, the operating status of the terminals 10, 70, and 90, the date and time when login requesting information, as will be described later, is received at the communication management system 50, and the IP address of each of the terminals 10, 70, and 90, in association with one another. For example, the terminal management table illustrated in FIG. 10 indicates that the terminal 10aa with the terminal ID "01aa" has the terminal name "AA terminal, Tokyo office, Japan", the operating status "online", the date and time received at which login requesting information is received by the communication management system 50 "April 10, 2015, 13:40", and the IP address "1.2.1.3". The terminal ID, the name of destination address, and the terminal IP address in the terminal management table of FIG. 10 is registered by the communication management system 50, when the communication management system 50 accepts registration of each of the terminals 10, 70, and 90 that requests services from the communication management system 50.

### <Contact List Management Table>

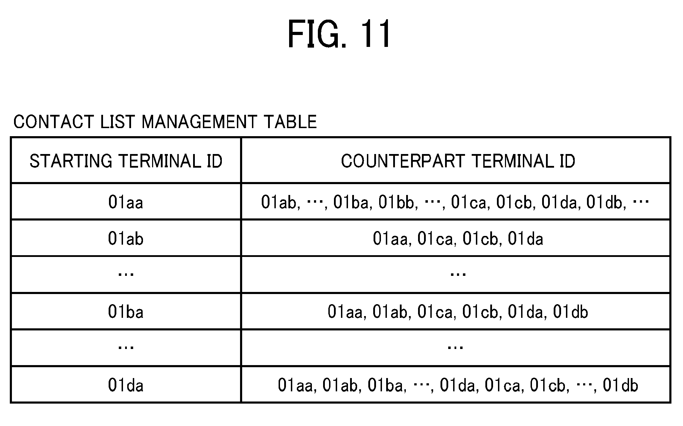

FIG. 11 is a diagram illustrating a contact list management table according to the present embodiment. In the memory 5000, as illustrated in FIG. 11, a contact list management data base (DB) 5003 that is made of a contact list management table is stored.

In the contact list management table, the terminal ID of starting terminals that request the startup of communication is all associated with the terminal ID of counterpart terminals registered as candidates for counterpart terminals, and is managed. For example, the contact list management table illustrated in FIG. 11 indicates that candidate counterparts to which a starting terminal (terminal 10aa) whose terminal ID is "01aa" can send a request to start communication in a video conference are the terminal 10ab whose terminal ID is "01ab", the terminal 10ba whose terminal ID is "01ba", the terminal 70bb whose terminal ID is "07bb", and so forth. Note that the terminal 70bb is one example of the communication terminal 70, as the electronic whiteboard 70 in FIG. 6. The candidate counterpart terminals are updated by addition or deletion in response to an adding or deleting request received from any request sender terminal (starting terminal) to the communication management system 50.

The contact list is just one example of contact information indicating a candidate of counterpart communication terminals, such that the contact information may be managed in various ways other than in the form of contact list, as long as the counterpart terminal information such as terminal ID of a candidate counterpart is associated with the starting terminal.

### <Session Management Table>

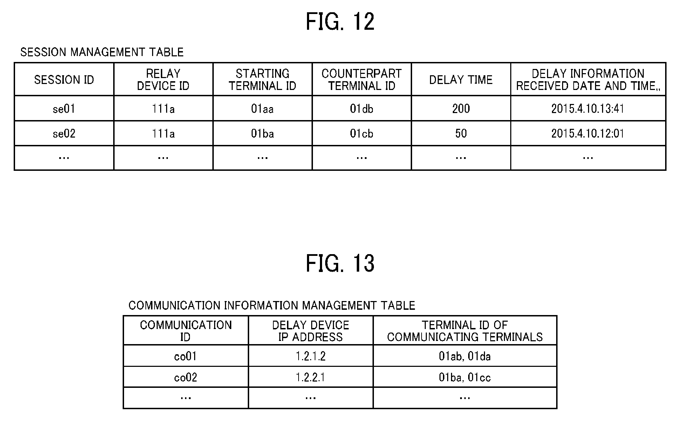

FIG. 12 is a diagram illustrating a session management table according to the present embodiment. In the memory 5000, as illustrated in FIG. 12, a session management data base (DB) 5004 that is made of a session management table is stored. In the session management table, the relay device ID of relay device 30 to be used, the terminal ID of a starting terminal, the terminal ID of a counterpart terminal, the delay time (millisecond (ms)) in reception when image data is received by the counterpart terminal, and date and time when the delay information indicating the delay time is sent from the counterpart terminal and is received at the communication management system 50 are associated with each communication session ID that identifies the session of intercommunication between a terminal and relay device 30. For example, the session management table illustrated in FIG. 12 indicates that the session is performed using the session ID "se01", the relay device (with the relay device ID "111a") relays image data and audio data between the starting terminal (terminal 10aa) with the terminal ID "01aa" and the counterpart terminal (terminal 10db) with the terminal ID "01db", and that the delay time of the image data at the counterpart terminal (terminal 10db) at "13:41, April 10, 2015" is 200 ms.

### <Communication Information Management Table>

FIG. 13 is a diagram illustrating a communication information management table according to the present embodiment. In the memory 5000, as illustrated in FIG. 13, a communication information management data base (DB) 5005 that is made of a communication information management table is stored. In the communication information management table, the IP address of the relay device 30 to be used and the terminal ID of the communicating terminals are associated with each communication ID that identifies the intercommunication performed between the terminals and the relay device 30. Note that the communication ID is an example of communication identification information. When conference is held among a plurality of terminals, the communication ID indicates conference ID that identifies the conference. For example, the communication information management table illustrated in FIG. 13 indicates that the intercommunication is identified by the communication ID "co01", the IP address of the relay device (relay device ID "111a") is "1.2.1.2", and that the terminal ID of the communicating terminals includes "01ab" and "01da".

### <Detailed Functional Configuration of Communication Management System>

Next, the functional configuration of the communication management system 50 is described in detail. In the following description of the functional configuration of the communication management system 50, relation of the hardware configuration of FIG. 3 with functional configuration of the management system 50 in FIG. 8 will also be described.

The data transmitter and receiver 31 of the communication management system 50 illustrated in FIG. 8 is implemented by the instructions from the CPU 501 illustrated in FIG. 3 and the network interface (I/F) 509 illustrated in FIG. 7, and transmits or receives various kinds of data (or information) to or from the other terminal, apparatus, or system through the communication network 4.

The determiner 52 is implemented by the instructions of the CPU 501 illustrated in FIG. 3, and determines delay of data transmission or the like.

The selector 53 is implemented by the instructions from the CPU 501 illustrated in FIG. 3, and selects, based on the IP address of each of the terminals participating in a communication session, a relay device suited to intercommunication among terminals through the communication session.

The generator 54 is implemented by the instructions from the CPU 501 illustrated in FIG. 3, and generates communication information according to the request to start intercommunication sent from a terminal. The communication information includes, for example, the IP address of the relay device selected by the selector 53 and the communication ID.

The data processor 59 is substantially implemented by the instructions from the CPU 501 illustrated in FIG. 3 and the HDD 505 illustrated in FIG. 3, and performs processing to store various types of data in the memory 5000 or read various types of data stored in the memory 5000.

### <Functional Configuration of Communication Terminal 70a>

As illustrated in FIG. 7, the communication terminal 70a includes a data transmitter and receiver 71a, an acceptance unit 72a, a communication controller 73a, a display controller 74a, a determining unit 75a, a reader 77a, a short-range communication unit 78a, and a data processor 79a. These units are functions that are implemented by or that are caused to function by operating any of the elements illustrated in FIG. 4 in cooperation with the instructions of the CPU 701 according to the communication control program expanded from the SSD 704 to the RAM 703. The communication terminal 70a also includes a memory 7000 that is configured by the RAM 703 illustrated in FIG. 4 and the SSD 704 illustrated in FIG. 4.

### <Detailed Functional Configuration of Communication Terminal 70a>

Next, the components of the communication terminal 70a are described. The data transmitter and receiver 71a is implemented by the instructions from the CPU 701, the network interface (I/F) 705, and the external device connection interface (I/F) 706, each of which is illustrated in FIG. 4, and transmits or receives various kinds of data (or information) to or from the other terminal, apparatus, or system through the communication network 4. Before starting communication with other terminals 10, 70d, and 90a, the data transmitter and receiver 71a starts receiving terminal status information indicating the operating status of the communication terminals 10, 70d, and 90a as candidate counterparts, from the communication management system 50. The status information does not only indicate the operating status of the communication terminals 10, 70a, and 90a (whether each of the communication terminals is in an online or offline state), but also indicates a detailed state such as whether an online communication terminal can actually be reached, whether the online communication terminal is currently communicating with another terminal, and whether the user of the online communication terminal is temporarily absent. In addition, the status information not only indicates the operating status of each terminal, but also indicates various states, such as the state that the cable 120c is disconnected from the communication terminal 10, the state that some of the communication terminals 10, 70d, and 90a can output sounds but not images, or the state that some of the communication terminals 10, 70d, and 90a is muted. Hereinafter, the case in which the status information indicates the operating status is described by way of example.

The data transmitter and receiver 71 a may also serve as a starting unit to start communication with another communication terminal such as the communication terminal 10.

The acceptance unit 72a is substantially implemented by the instructions from the CPU 701, the contact sensor 715, and the electronic stylus controller 716, each of which is illustrated in FIG. 4, and receives various kinds of inputs from the user.

The communication controller 73a obtains drawing data that is drawn on the display 753 using the electronic stylus 554 or the hand H, and converts the drawing data into coordinate data that serves as stroke data. Further, when the communication terminal 70a transmits the drawing data to the communication terminal 70d, for example, the communication terminal 70d controls the display 753 of the electronic whiteboard 70d to display the same drawing based on the drawing data received from the communication terminal 70a.

The communication controller 73a is substantially implemented by the instructions of the CPU 701 illustrated in FIG. 4, in cooperation with any desired device relating to input or output of content data. In one example, the communication controller 13 performs image processing on an image captured by the camera 762. In another example, the communication controller 73a is implemented by the instructions from the CPU 701, and after the audio of the user is converted to an audio signal by the microphone 764, the communication controller 73a processes audio data based on this audio signal. In another example, the communication controller 73a is implemented by the instructions from the CPU 701 illustrated in FIG. 4, and outputs the audio signal according to the audio data to the loudspeaker 765 such that the loudspeaker 765 outputs a sound.

The display controller 74a is substantially implemented by the instructions from the CPU 701 illustrated in FIG. 4 and the display controller 713 illustrated in FIG. 4, and combines received image data of different resolutions to transmit the combined image data to the display 753. The display control 74a may also transmit information on a contact list, received from the communication management system 50, to the display 753, and control display of the contact list on the display 753.

The determiner 75a is substantially implemented by the instructions from the CPU 701 illustrated in FIG. 4, and determines whether any communication terminal including a short-range communication unit is within a predetermined distance from the communication terminal 70a.

The reader 77a is substantially implemented by the instructions from the CPU 701, the camera 762, and the external device connection interface (I/F) 706, each of which is illustrated in FIG. 4, and reads a bar code such as a Quick Response (QR) code to obtain the data indicated by the bar code.

The short-range communication unit 78a is substantially implemented by the instructions from the CPU 701, and the short-range communication circuit 719 with the antenna 719a, each of which is illustrated in FIG. 4, and transmits (provides) data and receives (obtains) data to or from the mobile station 90 by short-range radio communication.

The data processor 79 is substantially implemented by the instructions from the CPU 701 and the SSD 704 each of which is illustrated in FIG. 4, and stores various types of data in the memory 7000 or the recording medium 7010a or reads various types of data from the memory 7000 or the recording medium 7010a.

Further, every time image data and audio data are received in performing communication with another communication terminal, the memory 7000 overwrites the image data and audio data. The display 753 displays an image based on image data before being overwritten, and the loudspeaker 765 outputs audio based on audio data before being overwritten. The recording medium 7010a is implemented by the USB memory 755 that is illustrated in FIG. 4.

### <Functional Configuration of Communication Terminal 70d>

As illustrated in FIG. 7, the communication terminal 70d includes a data transmitter and receiver 71d, an acceptance unit 72d, a communication controller 73d, a display controller 74d, a determining unit 75d, a reader 77d, a short-range communication unit 78d, and a data processor 79d. As these components of the communication terminal 70d have the functions equivalent to those of the data transmitter and receiver 71a, the acceptance unit 72a, the communication controller 73a, the display controller 74a, the determining unit 75a, the reader 77a, the short-range communication unit 78a, and the data processor 79a of the communication terminal 70a, respectively, the description is omitted.

### <Functional Configuration of Mobile Station>

As illustrated in FIG. 7, the mobile station 90a includes a data transmitter and receiver 91a, an acceptance unit 92a, a communication controller 93a, a display controller 94a, a determining unit 95a, a reader 97a, a short-range communication unit 98a, and a data processor 99a. These units are functions that are implemented by or that are caused to function by operating any of the hardware elements illustrated in FIG. 5 in cooperation with the instructions of the CPU 901 according to the communication control program expanded from the EEPROM 904 to the RAM 903. The communication terminal 90 also includes a memory 9000a that is configured by the RAM 903 illustrated in FIG. 5 and the EEPROM 904 illustrated in FIG. 5.

### <Detailed Functional Configuration of Mobile Station>

Next, the components of the mobile station 90a are described. The data transmitter and receiver 91a is substantially implemented by the instructions from the CPU 901, and the long-range communication circuit 911 with the antenna 911a, each of which is illustrated in FIG. 5, and transmits or receives various kinds of data (for example, communication data) to or from another terminal, apparatus, or system through the communication network 2.

The acceptance unit 92a is substantially implemented by the instructions of the CPU 901 illustrated in FIG. 5 and by the touch panel 921 illustrated in FIG. 5, and receives various kinds of inputs from the user.

The communication controller 93a is substantially implemented by the instructions from the CPU 901 and the imaging device interface (I/F) 913 each of which is illustrated in FIG. 5, and performs image processing on the image data of an image captured by the camera 912. Alternatively, the communication controller 93a may be implemented by the instructions from the CPU 901 and the audio input and output interface (I/F) 916, and after the audio of the user is converted to an audio signal by the microphone 914, the communication controller 93a processes audio data based on this audio signal. Further, the communication controller 93a may be implemented by the instructions from the CPU 901 and the audio input and output interface (I/F) 916, each of which is illustrated in FIG. 5, and outputs the audio signal according to the audio data to the loudspeaker 915 such that the loudspeaker 915 outputs a sound.

The display controller 94a is substantially implemented by the instructions from the CPU 901 illustrated in FIG. 5, and controls display of an image based on the image data through the display 917.

The determining unit 95a is substantially implemented by the instructions from the CPU 901 illustrated in FIG. 5, and outputs a determination result as will be described later.

The reader 97a is substantially implemented by the instructions from the CPU 901, the camera 912, and the imaging device interface (I/F) 913, each of which is illustrated in FIG. 5, and reads a bar code such as a Quick Response (QR) code to obtain the data indicated by the bar code.

The short-range communication unit 98a is substantially implemented by the instructions from the CPU 901, and the short-range communication circuit 919 with the antenna 919a, each of which is illustrated in FIG. 5, and transmits (provides) data and receives (obtains) data to or from another counterpart terminal by short-range radio communication.

The data processor 99a is substantially implemented by the instructions from the CPU 901 and the EEPROM 904 each of which is illustrated in FIG. 5, and performs processing to store various types of data in the memory 9000a or read various types of data stored in the memory 9000a.

### <<Operation>>

Referring now to FIG. 6, FIG. 14A to FIG. 24, the operation of the communication system 1 according to the present embodiment is described. Firstly, the situation according to the present embodiment is briefly described with reference to FIG. 6. When a user Y at a site D wishes to perform intercommunication such as a video conference with a user X at a site A, the communication can be started with greater reliability when a request is sent to the mobile station 90a, which is a smartphone carried by the user X, than when a request is sent to the communication terminal 70a that is a stationary electronic whiteboard. For this reason, firstly, the user Y uses the communication terminal 70d to start intercommunication with the mobile station 90a of the user X. However, the display size of the mobile station 90a (smartphone) is smaller than that of the communication terminal 70a (electronic whiteboard), and it may be difficult for the user X to communicate with the user Y to a sufficient degree. In order to avoid such a situation, the user X switches the terminal from the mobile station 90a to the communication terminal 70a while communicating with the communication terminal 70d. It is to be noted that, according to the present embodiment, a user Z at a site C as a third party can join the intercommunication between the communication terminal 70a and the communication terminal 70d by sending a participation request to the mobile station 90a that is the switching terminal, or by sending a participation request to the communication terminal 70a that is the terminal to be switched to. Hereinafter, more detailed description thereof is given.

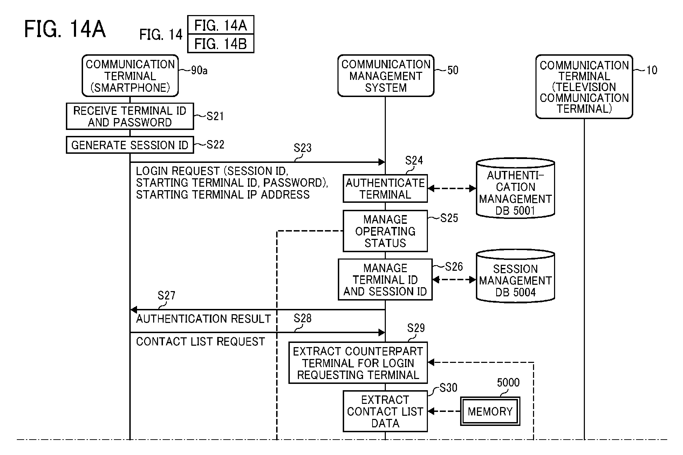

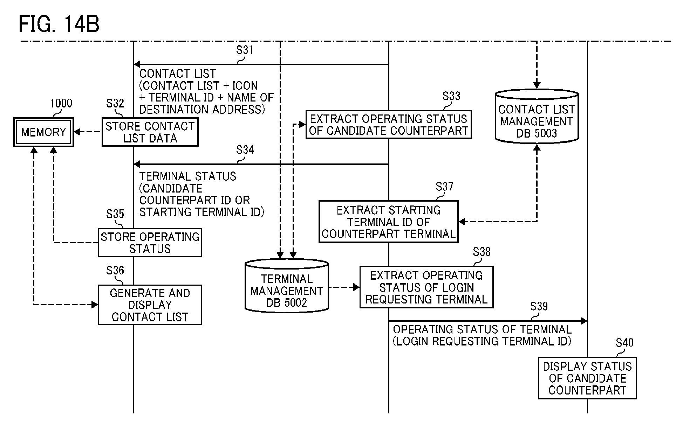

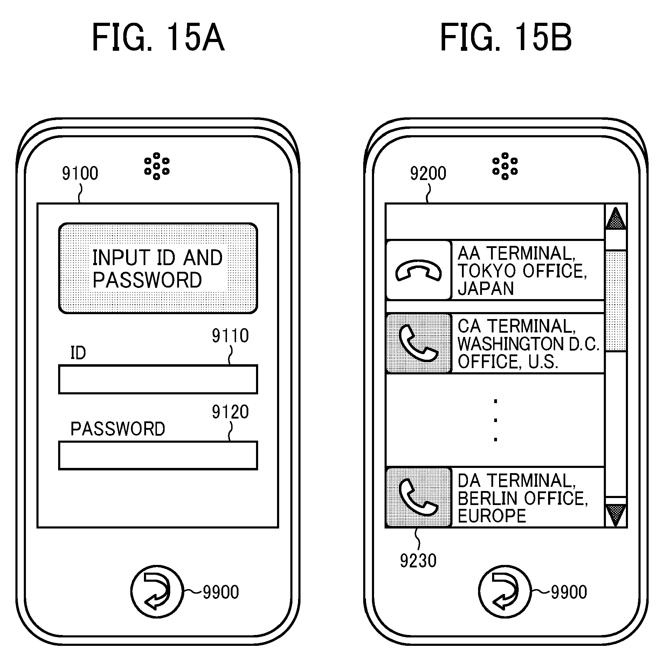

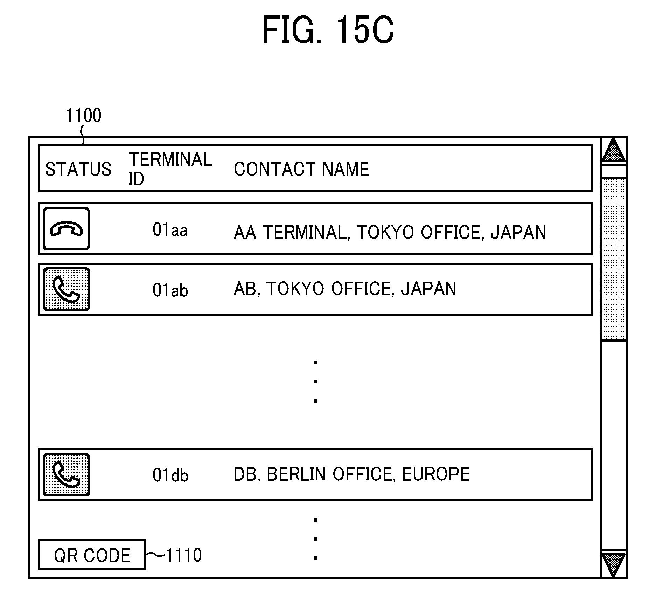

Firstly, the preparation processes for communication that the mobile station 90a performs as a login requesting terminal are described with reference to FIG. 14A, FIG. 14B, and FIG. 15. FIG. 14A and FIG. 14B are a sequence diagram illustrating the preparation processes for communication. FIG. 15A illustrates an example of a login screen of the mobile station 90a, according to the present embodiment. FIG. 15B illustrates an example of a contact list displayed on the mobile station 90a, according to the present embodiment. FIG. 15C illustrates an example of a contact list displayed on the communication terminal 10, according to the present embodiment.

Firstly, the display controller 94a of the mobile station 90a display an initial screen 9100 as illustrated in FIG. 15A. The initial screen 9100 displays an input field 9110 to which a terminal ID is to be input and an input field 9120 to which a password is to be input. Note also that a key 9900 is to be touched to make a selection or decision. When the terminal ID and the password of the user X is input to the input field 9110 and the input field 9120, respectively, the acceptance unit 92a receives the input of the terminal ID and the password (step S21). Then, the data transmitter and receiver 91a generates a session ID to identify the communication session (step S22).

Then, the data transmitter and receiver 91a transmits login requesting data indicating a login authentication request to the communication management system 50 through the communication networks 2 and 4 (step S23). The login requesting information includes the terminal ID and the password input in the step S21.

Next, the data processor 59 of the communication management system 50 searches for the authentication management table (see FIG. 9) using the terminal ID and the password included in the login requesting information received via the data transmitter and receiver 51 as search keys, and determines whether the same terminal ID and password are managed in the authentication management table. By so doing, the data processor 59 of the communication management system 50 authenticates a terminal (step S24). In the present embodiment, it is assumed that the data processor 59 manages the same terminal ID and the same password.

When the data processor 59 manages the same terminal ID and the same password and determines that the login request is sent from an authorized terminal, the data processor 59 changes the operating status field of the terminal ID received in the step S23 as above to "online" in the record of the terminal management table (see FIG. 10), and stores, in the field of received date and time, the date and time at which the login requesting information is received in the step S23 (step S25). For example, if the communication terminal 70a has the terminal ID "01ab", the data processor 59 stores the operating status "Online" and the received date and time "12:00, April 9, 2015" in association with the IP address "1.2.1.4" in the terminal management table. Note that the IP address of the terminal may be transmitted from the mobile station 90a in the step S23 instead of being registered in the terminal management table in advance.

Subsequently, the data processor 59 adds a new record including the terminal ID and password of the communication terminal 90a of the user, which was received in the step S23, in the session management table (see FIG. 12) (step S26). Then, the data transmitter and receiver 51 of the communication management system 50 transmits authentication result information indicating an authentication result obtained in the step S24 to the mobile station 90a that has sent the above-mentioned login request, via the second communication network 4 and the communication network 2 (step S27).

When the data transmitter and receiver 91a of the login requesting terminal (i.e., the mobile station 90a) receives the authentication result information indicating that the communication terminal 90a is an authorized terminal, the data transmitter and receiver 91a transmits contact list requesting information that requests a contact list to the management system 50 through the communication networks 4 and 2 (step S28). Accordingly, the data transmitter and receiver 51 of the communication management system 50 receives the contact list requesting information.

Next, the data processor 59 of the communication management system 50 searches the contact list management table (see FIG. 11), using the terminal ID "01ab" of the login requesting terminal (i.e., the mobile station 90a) which has sent the login request as a search key, to extract the terminal ID of a candidate counterpart that can communicate with the login requesting terminal (i.e., the mobile station 90a). The data processor 59 of the communication management system 50 further reads out the name of destination address associated with each one of the extracted terminal ID from the terminal management table (see FIG. 10) (step S29). In the present embodiment, at least the terminal ID and the associated name of destination address, for each one of one or more candidate counterparts for the login requesting terminal (i.e., the mobile station 90a) with the terminal ID "01ab", are extracted.

Next, the data transmitter and receiver 51 of the communication management system 50 reads from the memory 5000 contact list data, and icon data indicating the operating status of each candidate counterpart that, through the data processor 59 (step S30), and transmits the contact list, the icon, and the contact list information to the login requesting terminal (i.e., the mobile station 90a) (step S31). The contact list information includes the terminal ID and the name of destination address read by the data processor 59. Accordingly, the data transmitter and receiver 91a of the login requesting terminal (i.e., the mobile station 90a) receives the contact list information, and the data processor 99a stores the received contact list information in the memory 9000a (step S32).

As described above, in the present embodiment, instead of managing contact list information at each communication terminal, the communication management system 50 centrally manages the list information for all of the terminals. In this way, even when a communication terminal is newly added to the communication system 1 or an existing communication terminal is replaced with a different type of communication terminal in the communication system 1, or even when the appearance of the contact list is changed, the communication management system 50 can centrally reflect such changes without requiring each communication terminal to reflect such changes in the contact list information.

The data processor 59 of the communication management system 50 searches the terminal management table (see FIG. 10) using the extracted terminal ID of the candidate counterparts as search keys, to read the operating status of the corresponding terminal ID. Accordingly, the operating status of a candidate counterpart is obtained (step S33).

Next, the data transmitter and receiver 51 of the management system 50 transmits terminal status information including the terminal ID that serves as the search keys used in the step S33 as described above and the operating status of the corresponding counterpart terminals to the starting terminal (i.e., the communication terminal 70a) via the communication network 4 (S34).

Next, the data processor 79a of the starting terminal (i.e., the communication terminal 70a) sequentially stores in the memory 7000a the terminal status information received from the communication management system 50 (step S35). Based on the terminal status information received for each candidate counterpart as described above, the starting terminal (i.e., the communication terminal 70a) can obtain the current operating status of a candidate counterpart for the starting terminal (i.e., the communication terminal 70a) such as the operating status of the communication terminal 10.

Next, the display controller 94a of the login requesting terminal (i.e., the mobile station 90a) generates a contact list that reflects the current operating status of each candidate counterpart based on the contact list information stored in the memory 9000a and the terminal status information, and the display controller 94a displays contact list page 9200 on the display 917, as illustrated in FIG. 15B (step S36). On the contact list page 9200, an icon indicating the operating status of each counterpart terminal and the names of the destination addresses are displayed as in counterpart terminal information 9230. Note that the icons each reflecting the operating status of the corresponding terminal are displayed on the left side of the destination addresses. In FIG. 15B, the icon indicating the operating status of a terminal "offline" is displayed on the top, and the icons indicating the operational status of terminals "online" are displayed below the icon of "offline".

The data processor 59 of the communication management system 50 searches the contact list management table (see FIG. 11) using the terminal ID "01ab" of the login requesting terminal (i.e., the mobile station 90a) as a search key, to extract the terminal ID of other terminals that register the terminal ID "01ab" as a candidate counterpart (step S37). In the contact list management table illustrated in FIG. 11, the terminal ID of other terminals to be extracted are, for example, "01aa" and "01ca".

Next, the data processor 59 of the communication management system 50 searches the contact list management table (see FIG. 10) using the terminal ID "01ab" of the login requesting terminal (i.e., the mobile station 90a) as a search key, and obtains the operating status of the login requesting terminal (i.e., the mobile station 90a) (step S38).

Then, the data transmitter and receiver 51 transmits counterpart terminal status information including the terminal ID "01ab" and the operating status "Online" of the login requesting terminal (i.e., the mobile station 90a) obtained in the step S38 to terminals whose operating status indicates "Online" in the terminal management table (see FIG. 10) among the terminals with the terminal ID extracted in the step S37 (step S39). When transmitting the counterpart terminal status information to the communication terminal 10, the data transmitter and receiver 51 uses the terminal ID and refers to the IP addresses of the terminals, which are managed in the terminal management table illustrated in FIG. 10. Accordingly, the terminal ID "01ab" and the operating status "online" of the login requesting terminal (i.e., the mobile station 90a) can be transmitted to other counterpart terminals that can communicate with the login requesting terminal (i.e., the mobile station 90a) as a candidate counterpart. As a result, the candidate counterpart (such as the communication terminal 10) can display the operating status of the candidate counterparts as illustrated in FIG. 15C (step S40).

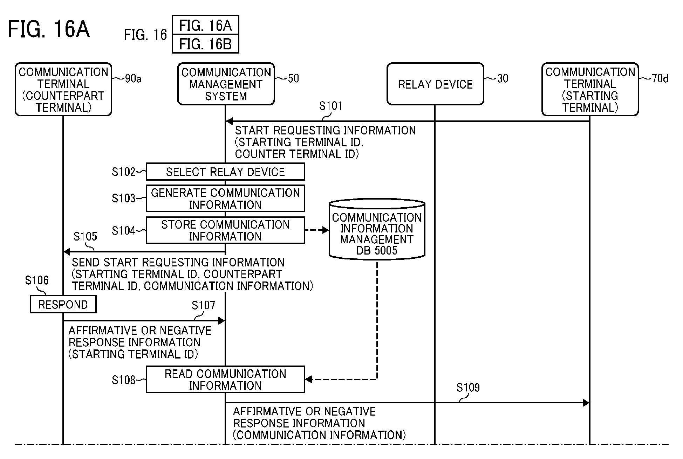

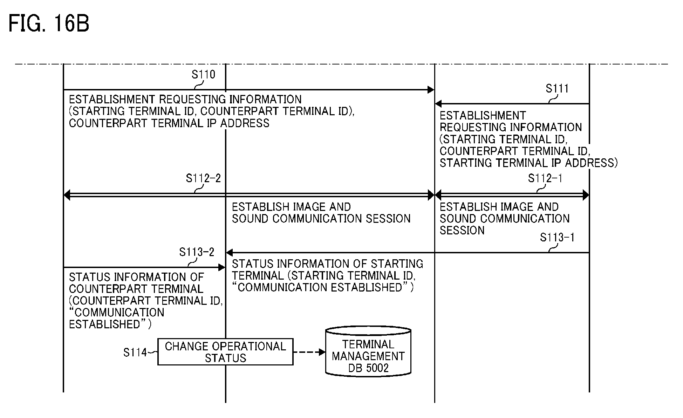

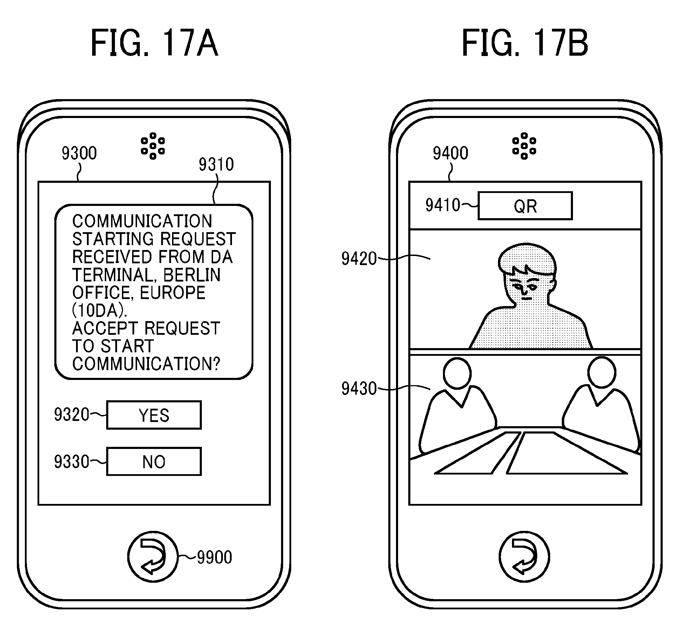

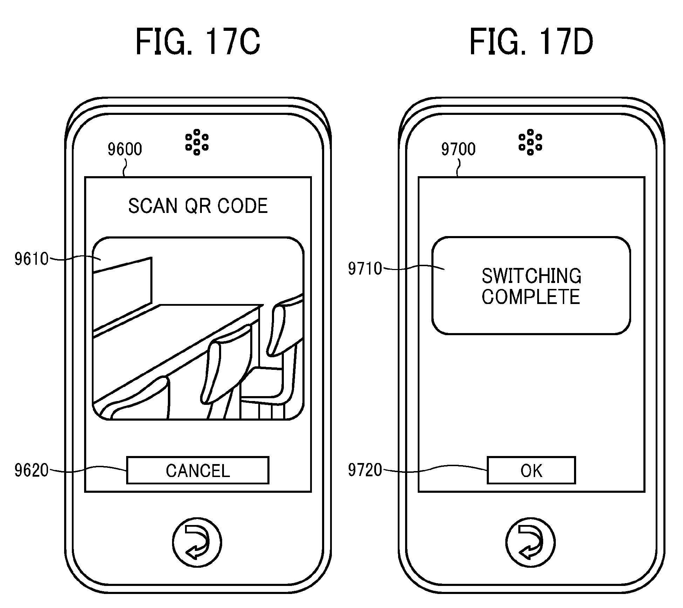

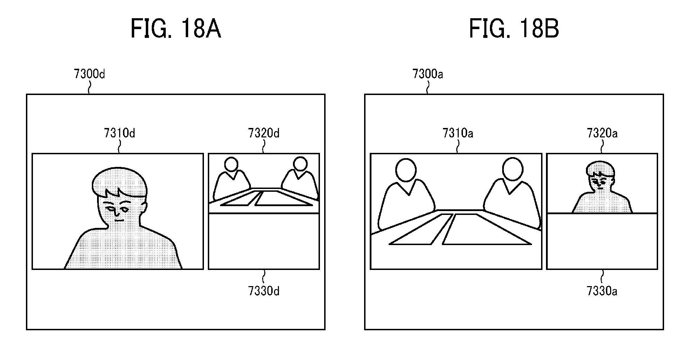

Subsequently, the processes of starting communication from the communication terminal 70d that serves as a starting terminal that requests to start intercommunication such as phone conversation to the communication management system 50 are described with reference to FIG. 16A to FIG. 18B. FIG. 16A and FIG. 16B are a sequence diagram illustrating how intercommunication starts among terminals, according to the present embodiment. FIG. 17A, FIG. 17B, FIG. 17C, and FIG. 17D are diagrams illustrating examples of the screen of a mobile station when the mobile station communicates with another terminal, according to the present embodiment. FIG. 18A is a diagram illustrating an example of the screen on the communication terminal 70d side during intercommunication, according to the present embodiment. FIG. 18B is another diagram illustrating an example of the screen on the communication terminal 70a side during intercommunication, according to the present embodiment.

Firstly, the communication terminal 70d sends start requesting information, which requests to start intercommunication, to the communication management system 50 (step S101). The start requesting information includes the terminal ID of the starting terminal (i.e., the communication terminal 70a in the present embodiment) and the terminal ID of the counterpart terminal (i.e., the mobile station 90a in the present embodiment). Accordingly, the communication management system 50 receives the start requesting information.

Subsequently, the selector 53 of the communication management system 50 selects the nearest relay device based on the IP address of a starting terminal and the IP address of a counterpart terminal (step S102). The IP addresses of terminals are managed in the terminal management table, and the IP addresses of relay devices are stored in the memory 5000 in advance. Next, the generator 54 generates communication information including the IP addresses of relay devices and the above-described communication ID (step S103). Then, the data processor 59 stores the communication ID and the IP addresses of relay devices included in the communication information, and the terminal ID of the starting terminal and the counterpart terminal received in the step S101 in the communication information management table (see FIG. 13), in association with each other (step S104). Subsequently, the data transmitter and receiver 51 sends the start requesting information to the counterpart terminal (i.e., the mobile station 90a in the present embodiment) (step S105). Note that this start requesting information includes communication information in addition to the terminal ID sent from the starting terminal in the step S101. Accordingly, the data transmitter and receiver 91a of the counterpart terminal receives the start requesting information.

Next, the display controller 94a of the counterpart terminal displays a selection screen 9300 on the display 917 as illustrated in FIG. 17A. The selection screen 9300 includes a message 9310, a YES key 9320, and NO key 9320. The message 9310 indicates whether or not to start intercommunication in response to the request to start communication sent from the starting terminal. The YES key 9320 is to be touched to start the intercommunication, and the NO key 9330 is to be touched to reject the intercommunication. Hereinafter, the cases in which a user X touches the YES key 9320 are described.

When the "YES" key 9320 is touched, the acceptance unit 92a receives a response that the mobile station 90a can respond (step S106). Then, the data transmitter and receiver 91a transmits affirmative or negative response information to the communication management system 50 (step S107). In this case, the affirmative or negative response information indicates acceptance, and includes the terminal ID of the starting terminal. As a result, the data transmitter and receiver 51 of the communication management system 50 receives the response to the affirmative or negative response information.

Next, the data processor 59 of the communication management system 50 searches the communication information management table (see FIG. 13) using the terminal ID of the starting terminal received in the step S107 as a search key, and reads the relevant communication information (including communication ID and relay device IP address) (step S108). Then, the data transmitter and receiver 51 transmits affirmative or negative response information to the starting terminal. In this case, the affirmative or negative response information includes the communication information read in the step S108. As a result, the data transmitter and receiver 71d of the starting terminal receives the affirmative or negative response information (step S109).

Subsequently, the data transmitter and receiver 91 a of the counterpart terminal sends establishment requesting information to the IP address of the relay device included in the communication information received in the step S105 (step S110). The establishment requesting information indicates a request to establish a intercommunication session, and the establishment requesting information includes the terminal ID of the starting terminal and the terminal ID of the counterpart terminal. At the same time, the IP address of the counterpart terminal is also sent. On the other hand, the data transmitter and receiver 71 d of the starting terminal sends establishment requesting information to the IP address of the relay device included in the communication information received in the step S109 (step S111). The establishment requesting information indicates a request to establish a intercommunication session, and the establishment requesting information includes the terminal ID of the starting terminal and the terminal ID of the counterpart terminal. At the same time, the IP address of the starting terminal is also sent. Accordingly, a communication session in which the relay device 30 and the starting terminal send and receives image data and audio data to and from each other is established (step S112-1), and a communication session in which the relay device 30 and the counterpart terminal send and receives image data and audio data to and from each other is established (step S 112-2).

Then, the data transmitter and receiver 71a of the starting terminal transmits the status information of the starting terminal to the communication management system 50 (step S113-1). The status information includes the terminal ID of the starting terminal and the operating status information (here, it is "communication established"). As a result, the data transmitter and receiver 51 of the communication management system 50 receives the status information of the starting terminal. On the other hand, the data transmitter and receiver 91 a of the counterpart terminal transmits the status information of the local terminal (i.e., the counterpart terminal) to the communication management system 50 (step S 113-2). The status information includes the terminal ID of the counterpart terminal and the operating status information (here, it is "communication established"). As a result, the data transmitter and receiver 51 of the communication management system 50 receives the status information of the counterpart terminal. As described above, each terminal notifies the communication management system 50 of the operational status of the local terminal. Then, the data processor 59 of the communication management system 50 changes the operating status associated with the terminal ID of the starting terminal to "communication established" in the terminal management table (see FIG. 10), and changes the operational status associated with the terminal ID of the counterpart terminal to "communication established" (step S 114). As a result, a communication screen 9400 through which a video conference can be held by intercommunication is displayed on the counterpart terminal side as illustrated in FIG. FIG. 17B. On the communication screen, a QR key 9410, a display area 9420, and a display area 9430 are displayed. The QR key is to be touched to read a QR code. The display area 9420 displays the image (moving images) on the local terminal side, and the display area 9430 displays the image (moving images) on the counterpart terminal side. Note also that on the other side, a communication screen 7300d as illustrated in FIG. 18A is displayed on the starting terminal. On the communication screen 7300d, a display area 7310d and a display area 7320d are displayed. The display area 7310d indicates an image (moving images) on the mobile station 90a side, and the display area 7320d indicates an image (moving images) on the communication terminal 70d (local terminal) side. Further, a display area 7330d indicating the image (moving images) on a third party (participant) side is displayed on the communication screen 7300d.

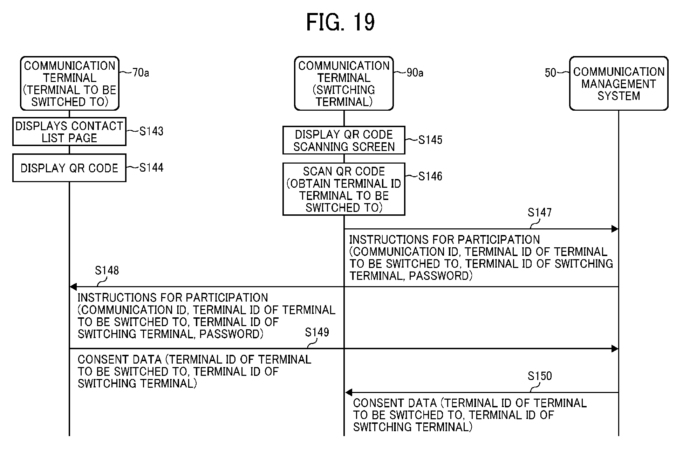

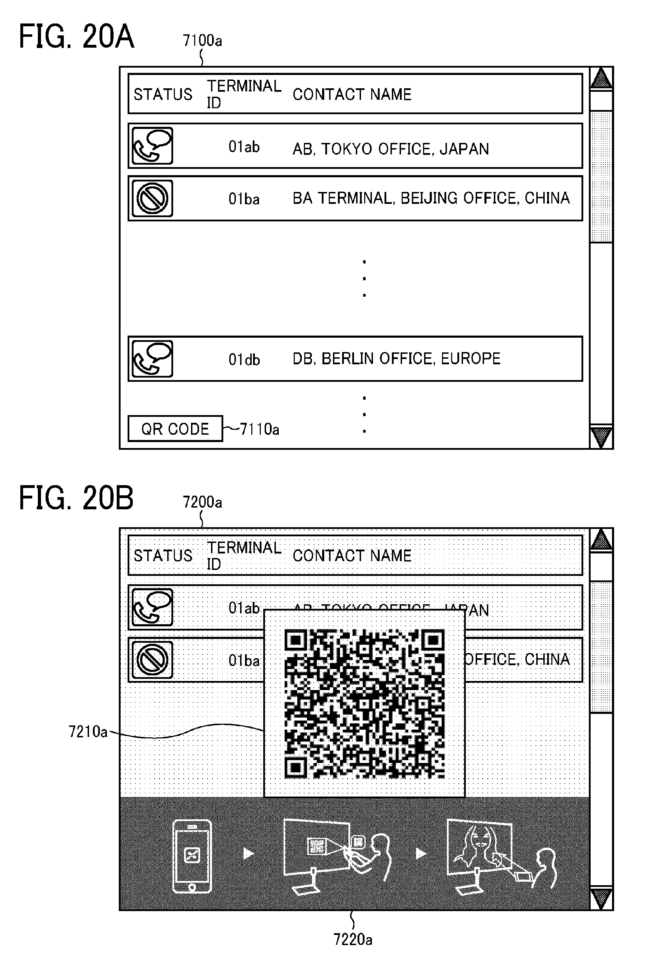

Next, the processes of switching the intercommunication while the mobile station 90a is communicating with an external terminal (the communication terminal 70d), where the mobile station is the switching terminal and the communication terminal 70a is the terminal to be switched to, are described with reference to FIG. 17A to FIG. 20B. FIG. 19 is a sequence diagram illustrating the processes of switching the intercommunication to a terminal to be switched to, while a switching terminal is communicating with a counterpart terminal. FIG. 20A and FIG. 20B are diagrams each illustrating an example of a screen of a terminal to be switched to, which appears when the intercommunication is to be switched.

Firstly, as illustrated in FIG. 19, in response to an input operation made by the electronic stylus 754 or the like, the display controller 74a of the terminal to be switched to (here, it is the communication terminal 70a) displays on the display 753 a contact list page 7100a as illustrated in FIG. 20A (step S143). The contact list page 7100a indicates the operating status, the terminal ID, and the name of destination address of a candidate counterpart. The processes of displaying the contact list page 7100a are substantially similar to those described as above with reference to FIG. 14A and FIG. 14B, and only the difference is in that the mobile station 90a is replaced with the communication terminal 70a. For this reason, the description is omitted. Moreover, the contact list page 7100a displays a QR code key 7110a to be touched to display a QR code below. When the QR code key 7110a is touched, the acceptance unit 72a receives a request for display, and the display controller 74a displays a QR code display screen 7200 as illustrated in FIG. 20B (S144). The QR code display screen 7200a displays a QR code 7210a indicating the terminal ID of the local terminal (i.e., the communication terminal 70a) and explanatory illustrations 7220a indicating how to read the QR code by a typical mobile station.

Subsequently, when the QR key 9410 as illustrated in FIG. 17B is touched, the acceptance unit 92a receives instructions to display the screen for scanning a QR code, and the display controller 94a makes instructions to switch the display to a QR code scanning screen 9600 as illustrated in FIG. 17C (step S145). On the QR code scanning screen 9600, an image display area 9610 and a cancellation key are displayed. An image viewing through the camera 912 is displayed on the image display area 9610, and the cancellation key 9620 is to be touched to cancel the display of the image display area 9610 and to get back to the communication screen 9400. When the switching terminal is made close to a terminal to be switched to and the QR code 7210a illustrated in FIG. 20B is displayed on the image display area 9610 as illustrated in FIG. 17C, the reader 97a reads the QR code (step S146). By so doing, the switching terminal can obtain the terminal ID of the terminal to be switched to.

Subsequently, the data transmitter and receiver 91a of the switching terminal transmits instructions for participation to the communication management system 50 (step S147). The instructions for participation request the terminal to be switched to to join the intercommunication being performed by the switching terminal. Such instructions for participation includes communication ID, the terminal ID of a terminal to be switched to, the terminal ID of a switching terminal, and a password. The communication ID is information identifying the intercommunication being performed by the switching terminal, and is included in the communication information received by the switching terminal (i.e., the mobile station 90a) in the step S105. The password is the password for the mobile station 90a, and is the password input in the step S21. As a result, the data transmitter and receiver 51 of the communication management system 50 receives the instructions for participation.

Next, the data transmitter and receiver 51 directly transfers the instructions for participation received in the step S147 to the terminal to be switched to (step S148). In so doing, the data transmitter and receiver 51 of the communication management system 50 transfers the instructions for participation to the IP address of the terminal to be switched to, which is managed in the terminal management table (see FIG. 10). As a result, the data transmitter and receiver 71a of the terminal to be switched to receives the instructions for participation. In response, the data transmitter and receiver 71a of the terminal to be switched to transmits to the communication management system 50 consent data indicating consent to the participation (step S 149). As a result, the data transmitter and receiver 51 of the communication management system 50 receives the consent data. Such consent data includes the terminal ID of the terminal to be switched to and the terminal ID of the switching terminal.

In the process of the step S149 where the consent data is transmitted to the communication management system 50, the data transmitter and receiver 71a of the terminal to be switched to may transmit status information indicating "temporarily absent" as the status information of the switching terminal. If such status information is received, the communication management system 50 manages the operating status of the switching terminal as "temporarily absent" until status information indicating "communication established" is received in the process of a step S230 as will be described later.

Next, the data transmitter and receiver 51 directly transfers the consent data received in the step S149 to the switching terminal (step S150). As a result, the data transmitter and receiver 91a of the switching terminal receives the consent data. As described above, even if the IP address of the terminal to be switched to is not obtained and not available on the switching terminal side, the switching terminal can send instructions for the participation to the intercommunication through the communication management system 50.

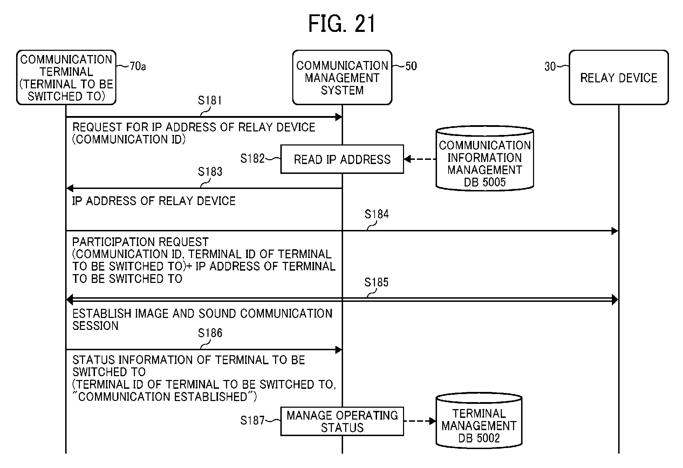

Next, the processes in which a terminal to be switched to joins the intercommunication are described with reference to FIG. 21. FIG. 21 is a sequence diagram illustrating the processes in which a terminal to be switched to joins the intercommunication.

The terminal to be switched to is unaware of the relay device being used for the intercommunication. For this reason, as illustrated in FIG. 21, firstly, the data transmitter and receiver 71a of the terminal to be switched to sends a request for the IP address of relay device 30 to the communication management system 50 (step S181). The request includes the communication ID received in the process of the step S148. As a result, the data transmitter and receiver 51 of the communication management system 50 receives the request. Subsequently, the data processor 59 searches the communication information management table (see FIG. 13) using the communication ID received in the step S181 as a search key to read the IP address of the relevant relay device (step S182). Then, the data transmitter and receiver 51 transmits the read IP address of the relay device 30 to the terminal to be switched to (step S183). Accordingly, the terminal to be switched to receives the IP address of the relay device 30.

Next, the data transmitter and receiver 71a of the terminal to be switched to sends participation requesting data, which requests to participate the intercommunication, to the relay device 30 (step S184). Such participation requesting data includes the communication ID transmitted in the step S181, and the terminal ID of the terminal to be switched to. In the transmission in the step S184, the IP address of the terminal to be switched to is also transmitted. Accordingly, the data transmitter and receiver 31 of the relay device 30 receives the participation request. As a result, image and sound communication session is established between the relay device 30 and the terminal to be switched to (step S185), and the terminal to be switched to can join the intercommunication indicated by the communication ID.

Next, the data transmitter and receiver 71a of the terminal to be switched to transmits the status information of the terminal to be switched to (local terminal) to the communication management system 50 (step S186). The status information includes the terminal ID of the terminal to be switched to and the operating status information (here, it is "communication established"). As a result, the data transmitter and receiver 51 of the communication management system 50 receives the status information of the terminal to be switched to. Then, the data processor 59 of the communication management system 50 changes the operating status associated with the terminal ID of the terminal to be switched to to "communication established" in the terminal management table (see FIG. 10) (step S187).

As a result, on the terminal to be switched to side, a communication screen 7300a as illustrated in FIG. 18B is displayed. On the communication screen 7300a, a display area 7310a and a display area 7320a are displayed. The display area 7310a indicates an image on the communication terminal 70d side, and the display area 7320a indicates an image (moving images) on the communication terminal 70a (local terminal) side. Further, a display area 7330a indicating the image (moving images) on a third party (participant) side is displayed on the communication screen 7300a. As described above, the small communication screen 9400 of the mobile station 90a (smartphone) as illustrated in FIG. 17B can be switched to the large communication screen 7300a of the communication terminal 70a (electronic whiteboard) to continue a conference or the like with the communication terminal 70d. Accordingly, the communicating with a remote site can be improved.

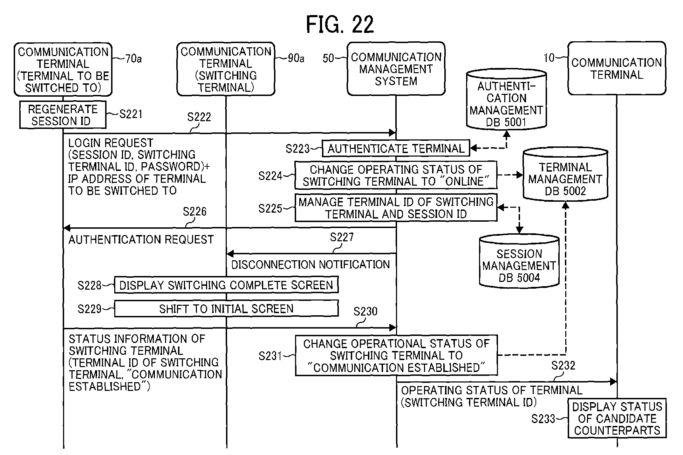

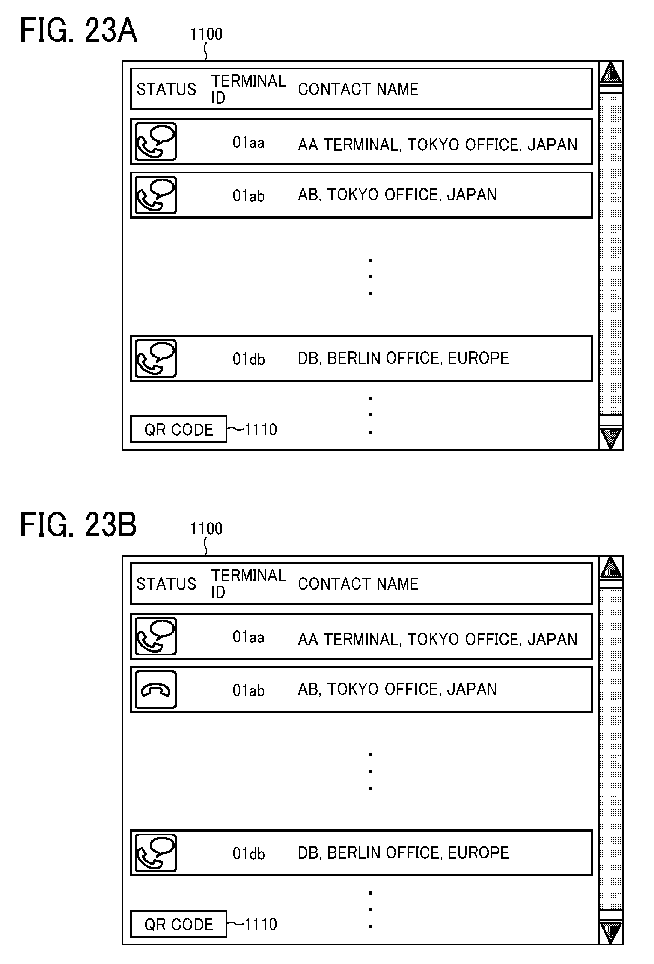

Next, how a terminal to be switched to makes a switching terminal log in and sends a status change notice on behalf of the switching terminal is described with reference to FIG. 18A, FIG. 18B, FIG. 22, and FIG. 23. FIG. 22 is a sequence diagram illustrating how a terminal to be switched to makes a switching terminal log in and sends a status change notice on behalf of the switching terminal, according to the present embodiment. FIG. 23A and FIG. 23B each illustrate an example of a contact list displayed on the communication terminal 10, according to the present embodiment.

Subsequent to the step S186 illustrated in FIG. 21, as illustrated in FIG. 22, the terminal to be switched to regenerates session ID as a switching terminal (step S221). Then, the data transmitter and receiver 71a of the terminal to be switched to, as a switching terminal, transmits login requesting data indicating a login authentication request to the communication management system 50 (step S222). Such login requesting data includes the session ID generated in the step S221, and the terminal ID of the switching terminal obtained in the process of the step S149 and the password. In the transmission in the step S222, the IP address of the terminal to be switched to is also transmitted. As a result, the data transmitter and receiver 51 of the communication management system 50 receives the login requesting information.

Next, the data processor 59 of the communication management system 50 searches for the authentication management table (see FIG. 9) using the terminal ID and the password included in the login requesting information received via the data transmitter and receiver 51 as search keys, and determines whether the same terminal ID and password are managed in the authentication management table. By so doing, the data processor 59 of the communication management system 50 authenticates a terminal (step S223). In the present embodiment, it is assumed that the data processor 59 manages the same terminal ID and the same password.

When the data processor 59 manages the same terminal ID and the same password determines that the login request is sent from an authorized terminal, the data processor 59 changes the operating status field of the terminal ID received in the step S222 as above to "online" in the record of the terminal management table (see FIG. 10), and stores, in the field of received date and time, the date and time at which the login requesting information is received in the step S23 (step S224). Then, the data processor 59 deletes the record generated in the step S26 when the switching terminal logged in, and adds a record generated as the terminal to be switched to has logged in instead of the switching terminal (step S225). At that time, the data processor 59 manages, in the added record, the terminal ID of the switching terminal and the password received in the step S222 (step S225). Accordingly, the communication management system 50 determines that the communication session established due to the login request that the mobile station 90a made in the step S23 is cut off.

Next, the data transmitter and receiver 51 of the communication management system 50 transmits authentication request data indicating the authentication result obtained in the process of the step S223 to the terminal to be switched to that requested the login as above (step S226). Further, the data transmitter and receiver 51 transmits disconnection notification data indicating the disconnection of the communication session to the switching terminal (step S227). As a result, the data transmitter and receiver 91a of the switching terminal receives the disconnection notification data. Then, the display controller 94a of the switching terminal displays a switching complete screen 9700 as illustrated in FIG. 17D (step S228). On the switching complete screen 9700, a comment 9710 and an OK key 9720 are displayed. The comment 9710 indicates that the switching is complete, and the OK key 9720 is to be touched when a user X confirms that the switching is complete. When the OK key 9720 is touched, the acceptance unit 92a receives a touch, and the display controller 94a shifts the screen to a login screen that serves as an initial screen, as illustrated in FIG. 15A (step S229).

On the other hand, the data transmitter and receiver 71a of the terminal to be switched to transmits the status information of the switching terminal to the communication management system 50 in order to change the operating status of the switching terminal on behalf of the switching terminal (step S230). The status information includes the terminal ID of the switching terminal and the operating status information (here, it is "communication established"). As a result, the data transmitter and receiver 51 of the communication management system 50 receives the status information of the switching terminal. Then, the data processor 59 of the communication management system 50 changes the operating status associated with the terminal ID of the switching terminal from "online" changed so in the step S224 to "communication established" again in the terminal management table (see FIG. 10) (step S231). Then, in a similar manner to the step S39, the data transmitter and receiver 51 transmits the operating status data indicating the operating status of the switching terminal, which is changed in the step S231, to the communication terminal 10 or the like (step S232). The operating status data includes the terminal ID of the switching terminal. Accordingly, a third terminal such as the communication terminal 10 receives the operating status data. As a result, as illustrated in FIG. 23A, the third terminal (the communication terminal 10 or the like) can display the status of candidate counterparts (step S233). In FIG. 23A, the operating status of the terminal to be switched to (i.e., the communication terminal 70a) with the terminal ID "01aa" and the operating status of the switching terminal (i.e., the mobile station 90a) with the terminal ID "01ab" both indicates "communicating (communication established)".

As described above, in the present embodiment, the operating status indicates "communicating" even though the communication session of the switching terminal is disconnected. Accordingly, a user Z of the communication terminal 10 as a third party can join the intercommunication such as a conference without considering whether the counterpart terminal is the switching terminal or the terminal to be switched to. When the configuration according to the present embodiment is not adopted, as illustrated in FIG. 23B, the operating status of the switching terminal (i.e., the mobile station 90a) with the terminal ID "01ab" becomes "offline" due to the disconnected communication session, and participation request for intercommunication cannot be sent to the mobile station 90a.

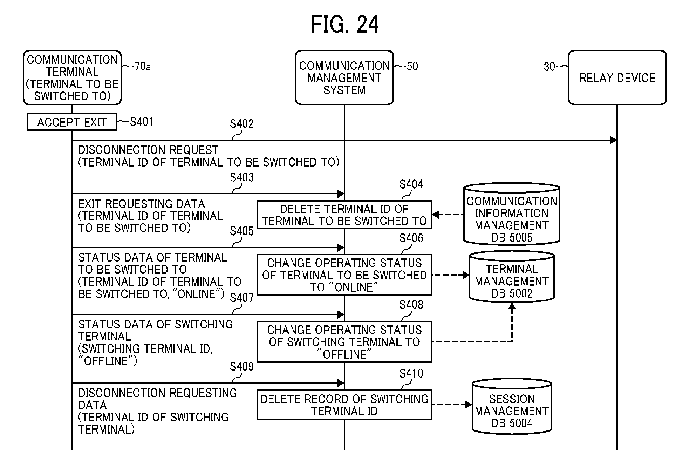

Next, the processes of terminating the intercommunication are described with reference to FIG. 24. FIG. 24 is a sequence diagram illustrating the processes of terminating intercommunication, according to the present embodiment.

Firstly, the acceptance unit 72a of the terminal to be switched to (here, it is the communication terminal 70a) receives an input operation made by an user X using the electronic stylus 754 or the like, and accepts an exit from the communication (step S401). Then, the data transmitter and receiver 71a transmits disconnection requesting data, which requests to disconnect the communication session, to the relay device 30 (step S402). Such disconnection requesting data includes the terminal ID of a terminal to be switched to. Accordingly, the data transmitter and receiver 31 of the relay device 30 receives the disconnection requesting data. Further, the data transmitter and receiver 71a of the terminal to be switched to transmits exit requesting data, which requests to exit from the intercommunication, to the communication management system 50 (step S403). Such exit requesting data includes the terminal ID of a terminal to be switched to. As a result, the data transmitter and receiver 51 of the communication management system 50 receives the exit requesting data. Then, the data processor 59 of the communication management system 50 deletes the terminal ID of the terminal to be switched to in the communication information management table (see FIG. 13) (step S404).

Further, in order to change the management of the operating status of the terminal to be switched to, the data transmitter and receiver 71a of the terminal to be switched to transmits the status data, indicating the operating status of the terminal to be switched to, to the communication management system 50 (step S405). The status data includes the terminal ID of the terminal to be switched to, and the operating status data indicating the operating status "online". As a result, the data transmitter and receiver 51 of the communication management system 50 receives the status information of the terminal to be switched to. Then, the data processor 59 of the communication management system 50 uses the terminal ID of the terminal to be switched to, and changes the operating status of the terminal to be switched to in the terminal management table (see FIG. 10) to "online" (step S406).

Then, in order to change the management of the operating status of the switching terminal on behalf of the switching terminal, the data transmitter and receiver 71a of the terminal to be switched to transmits the status data, indicating the operating status of the switching terminal, to the communication management system 50 (step S407). The status data includes the terminal ID of the switching terminal, and the operating status data indicating the operating status "offline". As a result, the data transmitter and receiver 51 of the communication management system 50 receives the status information of the switching terminal. Then, the data processor 59 of the communication management system 50 uses the terminal ID of the switching terminal, and changes the operating status of the switching terminal to in the terminal management table (see FIG. 10) to "offline" (step S408).

Further, in order to change the management of the communication session of the switching terminal to "disconnected" on behalf of the switching terminal, the data transmitter and receiver 71 a of the terminal to be switched to transmits the disconnection requesting data to the communication management system 50 (step S409). Such disconnection requesting data includes the terminal ID of a switching terminal. As a result, the data transmitter and receiver 51 of the communication management system 50 receives the disconnection requesting data. Then, the data processor 59 of the communication management system 50 uses the terminal ID of the switching terminal, and deletes the record of the terminal ID of the switching terminal in the session management table (see FIG. 12) (step S410). Accordingly, the communication management system 50 determines that the communication sessions of the terminal to be switched to and the switching terminal are "disconnected" and the operating status of the terminal to be switched to and the switching terminal is "offline".

As described above, according to the present embodiment, the terminal to be switched to (i.e., the communication terminal 70a) provides the switching terminal (i.e., the mobile station 90a) with the terminal ID of the local terminal (i.e., the communication terminal 70a) (as an example of local terminal identification information) through a QR code (see S144), and receives the terminal ID of the switching terminal (as an example of the external terminal identification information) sent to the provided terminal ID from the switching terminal through the communication management system 50 (see S148). Then, the terminal to be switched to sends the login requesting information of the switching terminal to the communication management system 50 on behalf of the switching terminal (see S222). As described above, the terminal to be switched to sends the login authentication request on behalf of the switching terminal. By so doing, even after the communication terminal 70d has sent a request to start communication to the mobile station 90a and the intercommunication has started, the counterpart terminal of the communication terminal 70d can be switched from the switching terminal to a terminal to be switched to in a smooth manner.

The terminal to be switched to (i.e., the communication terminal 70a) transmits to the communication management system 50 first status information indicating that the local terminal (i.e., the communication terminal 70a) is "communicating" (see S186) and second status information indicating that the switching terminal is "communicating" (see S230). Accordingly, a user Z of the communication terminal 10 as a third party can join the intercommunication such as a conference without considering whether the counterpart terminal is the switching terminal or the terminal to be switched to.

In the embodiment described above, the terminal ID of the terminal to be switched to was provided to the switching terminal using a QR code. However, no limitation is intended therein. For example, the terminal ID of the terminal to be switched to may be provided by short-range radio communication using the short-range communication units 78a and 98a or by wire communication using, for example, a USB cable.

In the step S107 as described above, the affirmative or negative response information includes the terminal ID of a starting terminal. However, no limitation is intended therein. For example, the affirmative or negative response information may include the communication information instead of the terminal ID of the starting terminal. In this case, the data processor 59 of the communication management system 50 searches the communication information management table (see FIG. 13) using the communication information as a search key, to read the terminal ID of the corresponding starting terminal.

The case of a video conference terminal or an electronic whiteboard has been described as an example of a communication terminal in the above-described embodiment. However, no limitation is intended therein. The communication terminal may be an Internet protocol (IP) phone, an Internet phone, a car navigation terminal, or a surveillance camera. In alternative to the video conference terminal and the electronic whiteboard, any other type of office equipment may be used such as a printer, facsimile, and multifunction peripheral (MFP). The communication terminal may be implemented as medical equipment, such as an endoscope, a Computed Tomography (CT) scan, and radiotherapy equipment.

Further, in alternative to the smart phone, any other mobile terminal may be used, such as a portable phone, digital camera, portable game machine, IC card, or wearable computer. A wearable computer includes, for example, a smart watch and a head-mounted display.

In addition, although image data and audio data are described as examples of content data in the above-described embodiment, the content data is not limited to these items of data, and the content data may be touch data. In this case, a feeling obtained by a user's contact at one terminal side is transmitted to the other terminal side. Further, the content data may be smell data. In this case, a smell at one terminal side is transmitted to the other terminal side. Based on the received data of smell, a smell generator, which may be incorporated in or connected to the other terminal, may generate a smell based on such received data. The content data may be at least one of image data, audio data, touch data, and smell data.

Although the case in which a video conference is held by the communication system 1 has been described in the above-described embodiment, the embodiment is not limited to this case. The communication system 1 may be used in meetings, general conversation between family members or friends, or one-way presentation of information.

In the above-described embodiments, a request for storing processes or a request for reading processes are transmitted or received by short-range radio communication such as near-field communication (NFC). However, such requests may be transmitted or received by ultrasonic communication.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored on any kind of storage medium. Examples of storage media include, but are not limited to, flexible disks, hard disks, optical discs, magneto-optical discs, magnetic tape, nonvolatile memory cards, ROM, etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. A communication terminal (10, 70a, 70d, 90a) comprising:
a processor (101, 701, 901) configured to output terminal identification information identifying the communication terminal (10, 70a, 70d, 90a);
a receiver (111, 705, 911) configured to receive external terminal identification information identifying an external communication terminal, the external terminal identification information being sent from the external communication terminal through a communication management system to an destination address of the communication terminal (10, 70a, 70d, 90a) indicated by the provided terminal identification information; and
a transmitter (111, 705, 911) configured to transmit login requesting information for requesting login authentication of the external communication terminal to the communication management system, the login requesting information including the received external terminal identification information.

2. The communication terminal (10, 70a, 70d, 90a) according to claim 1, wherein the transmitter (111, 705, 911) transmits to the communication management system first status information indicating that the communication terminal (10, 70a, 70d, 90a) is communicating and second status information indicating that the external communication terminal is communicating.

3. The communication terminal (10, 70a, 70d, 90a) according to claim 1, wherein the receiver (111, 705, 911) receives, from the external communication terminal through the communication management system, communication identification information for identifying intercommunication being performed by the external communication terminal,
the transmitter (111, 705, 911) transmits the received communication identification information to the communication management system,
the receiver (111, 705, 911) receives contact information of a relay device that relays the intercommunication being performed by the external communication terminal, the contact information being obtained by the communication management system based on the communication identification information received at the communication management system, and
the processor (101, 701, 901) establishes a communication session with the relay device based on the contact information to cause the communication terminal (10, 70a, 70d, 90a) to participate the intercommunication being performed by the external communication terminal.

4. The communication terminal (10, 70a, 70d, 90a) according to claim 3, wherein the transmitter (111, 705, 911) transmits to the communication management system exit requesting data requesting the communication terminal (10, 70a, 70d, 90a) to exit the intercommunication and disconnection requesting data requesting to disconnect communication of the external communication terminal.

5. The communication terminal (10, 70a, 70d, 90a) according to claim 4, wherein the transmitter (111, 705, 911) transmits to the communication management system third status information indicating that the communication terminal (10, 70a, 70d, 90a) can communicate and fourth status information indicating that the external communication terminal is disconnected from the communication session.

6. The communication terminal (10, 70a, 70d, 90a) according to claim 1, wherein the processor (101, 701, 901) control a display to display authentication information indicating the terminal identification information.

7. The communication terminal (10, 70a, 70d, 90a) according to claim 1, wherein the processor (101, 701, 901) controls the transmitter (111, 705, 911) to transmit the terminal identification information to the external communication terminal by short-range radio communication.

8. The communication terminal (10, 70a, 70d, 90a) according to claim 1, wherein the receiver (111, 705, 911) further receives authentication information of the external communication terminal, the authentication information being sent from the external communication terminal together with the external terminal identification information through the communication management system, and
the transmitter (111, 705, 911) transmits the authentication information together with the external terminal identification information to the communication management system.

9. The communication terminal (10, 70a, 70d, 90a) according to claim 1, wherein the processor (101, 701, 901) outputs the terminal identification information of the communication terminal (10, 70a, 70d, 90a) in a form of code to be read by the external communication terminal.

10. A communication system (1) comprising:
the communication terminal (10, 70a, 70d, 90a) according to claim 1; and
the communication management system (50) that manages communication status of the terminal (10, 70a, 70d, 90a).

11. The communication system (1) according to claim 10, further comprising:
an external communication terminal configured to obtain the terminal identification information output from the communication terminal (10, 70a, 70d, 90a), to transmit the external terminal identification information to the communication terminal (10, 70a, 70d, 90a) through the communication management system (50), and to transmit to the communication terminal (10, 70a, 70d, 90a) instructions for participation to the intercommunication being performed by the external communication terminal.

12. A method of communication, the method comprising:
outputting (S23, S 101, S147, S222) terminal identification information identifying a communication terminal (10, 70a, 70d, 90a);
receiving (S31, S150) external terminal identification information identifying an external communication terminal, the external terminal identification information being sent from the external communication terminal through a communication management system (50) to an destination address of the communication terminal (10, 70a, 70d, 90a) indicated by the provided terminal identification information; and
transmitting (S23, S222) login requesting information for requesting login authentication of the external communication terminal to the communication management system (50), the login requesting information including the received external terminal identification information.

13. The method according to claim 12, wherein
the transmitting (S23, S222) includes transmitting to the communication management system first status information indicating that the communication terminal (10, 70a, 70d, 90a) is communicating and second status information indicating that the external communication terminal is communicating.

14. The method according to claim 12, wherein
the receiving (S31, S150) includes receiving, from the external communication terminal through the communication management system, communication identification information for identifying intercommunication being performed by the external communication terminal,
the transmitting (S23, S222) includes transmitting the received communication identification information to the communication management system,
the receiving (S31, S150) includes receiving contact information of a relay device that relays the intercommunication being performed by the external communication terminal, the contact information being obtained by the communication management system based on the communication identification information received at the communication management system, and
the outputting (S23, S101, S147, S222) includes establishing a communication session with the relay device based on the contact information to cause the communication terminal (10, 70a, 70d, 90a) to participate the intercommunication being performed by the external communication terminal.

15. A carrier means carrying computer readable code for controlling a computer to carry out the method of claim 12.
